# EUROPEAN PATENT APPLICATION

(11) **EP 4 015 178 A1**
(43) Date of publication of application: **22.06.2022**
(21) Application number: 21185257.9
(22) Date of filing: 13.07.2021
(51) Int. Cl.: B29B 7/88, B29C 67/00, C08J 3/24, C08L 9/02, C08L 15/00, C08L 67/00, C08L 77/00

(54) **READILY-PROCESSABLE, HIGH-TEMPERATURE, OIL-RESISTANT THERMOPLASTIC VULCANIZATES**

(30) Priority: 21.12.2020 US 202063128360 P
(71) Applicant: Parker Hannifin Corp., Cleveland, OH 44124-4141 (US)
(72) Inventor: ABRAHAM, Tonson, Avon, OH 44011, (US); JINDAL, Aditya, Cuyahoga Falls, OH 44221, (US); MALLAMACI, Michael P., North Canton, OH 44720, (US); RUSSELL, Kenneth, Buford, GA 30519, (US); NGUYEN, Kristina T., Youngstown, OH 44512, (US); HORINGER, Joseph, Justin, New Franklin, OH 44319, (US)
(74) Representative: Neilson, Martin Mark

(57) **Abstract**

Disclosed are thermoplastic vulcanizates comprising a plastic phase and a rubber phase and process for preparing such thermoplastic vulcanizates, wherein the plastic phase comprises a thermoplastic polymer and the rubber phase comprises a hydrogenated carboxylated nitrile rubber.

## Description

### FIELD

The present invention discloses compositions and methods for the preparation of high-temperature thermoplastic vulcanizates (TPVs) that are resistant to hydrocarbon oils, by the dynamic vulcanization of hydrogenated carboxylated nitrile rubber (HXNBR) in high melting point, semi-crystalline thermoplastic materials, namely, polyesters and polyamides. The compositions of this invention can be readily produced and fabricated using commercially suitable plastics compounding and fabricating equipment to yield molded (by injection, extrusion or compression molding) parts with excellent surface appearance. Furthermore, addition-type curing agents that advantageously cure the rubber without the evolution of volatiles, without degradation of the plastic phase, and that facilitate rubber and plastic compatibilization, are disclosed.

### BACKGROUND

The commercialization of thermoplastic elastomers by dynamic vulcanization, although established over four decades ago, is still typified with the use of only a melt blend of only one plastic and one rubber, namely isotactic polypropylene (PP) and ethylene/propylene/diene (EPDM) rubber. In the commercial dynamic vulcanization process, high molecular weight (MW) PP is melt-blended with high MW EPDM, under intense shearing conditions provided by a corotating rotating twin screw (TSE) extruder. The EPDM generally used is extended with paraffinic oil, to allow ready process-ability of this rubber during its manufacture. Additional oil is added to the intimately melt-mixed PP/EPDM, kept at about 200° C, in the dynamic vulcanization process. Generally, for soft compositions (Shore A ≤90) the PP/EPDM melt blend is composed of a larger volume oil-swollen rubber phase and a lower volume solution of PP in oil. The high MW EPDM polymer chains are entangled. Although EPDM is soluble in paraffinic oil, and although the total mass of oil in the system may be comparable to the mass of the EPDM present, the oil does not completely disentangle the rubber. The oil partitions between the PP and rubber phase in proportion to the phase melt volume which is also close to the mass ratio of the oil-free components. Subsequently, a resole type of phenolic resin rubber curative is added to the said met blend, under continued intense mixing conditions. The rubber then is converted to a thermoset, without affecting the plastic phase. Under the high temperature and intense shearing conditions (shear rates can vary from 1000 s⁻¹ to 10,000 s⁻¹ during TPV preparation), the EPDM thermoset disintegrates into fine, oil-swollen, crosslinked rubber particles that are then contained in a solution of PP in oil. Although in the initial melt blend, prior to dynamic vulcanization, the oil-swollen EPDM (the larger phase volume) is the continuous phase, and the solution of PP in oil may be a discreet or co-continuous phase, after dynamic vulcanization a phase inversion occurs to yield a continuous phase of a solution of PP in oil that is filled with crosslinked, oil-swollen, particulate EPDM rubber. On cooling, PP crystallizes from oil, nucleated by the rubber particles. The oil that is rejected from the PP crystallites further swells the rubber particles, and some of the oil pools in the amorphous PP phase. The room temperature morphology of the solid TPV is best described as a continuous matrix of PP, filled with oil-swollen, crosslinked, distorted spherical rubber particles of 1µm to 5µm in diameter. Sub-micron pools of oil are also present in the amorphous portion of the PP phase.

There is a need for high temperature, hydrocarbon oil-resistant TPVs for variety of products, such as, for example, gaskets, tubes, hoses, and seals. However, the maximum "continuous" use temperature of a PP/EPDM TPVs is only about 90°C, limiting its use as a high temperature, oil-resistant TPV.

In the design of high temperature (150°C "continuous" use) oil-resistant TPVs, a high melting polar plastic, together with a broad use temperature (-40°C to 150°C) elastomer combination has to be chosen. Commercially available semi-crystalline polar plastic materials, such as polyesters and polyamides, are potential candidates for the application. Note that a semi-crystalline plastic is preferable over a completely amorphous plastic. For example, poly (butylene terephthalate) (PBT) has a melting point of about 225°C, and a glass transition temperature (T_{g}) of about 50°C. The melting point of PBT and its creep properties will determine the upper use temperature of a PBT containing TPV. A material increases in flow gradually, when heated beyond the T_{g}. A major factor controlling the upper use temperature of the TPV is the PBT melting point. On PBT melting during TPV processing, the temperature is already 175°C above the T_{g}, and hence the plastic melt flows readily, which is important in TPV melt viscosity control, as the viscous drag of the plastic melt over the crosslinked rubber particles can result in a poorly processable product. If the plastic were completely amorphous, the use temperature would have to be below the plastic T_{g}. Even if a plastic with a T_{g} of 175°C were chosen, the flow properties of this plastic even at 275°C would probably be unacceptable in the application. Furthermore, thermal, thermo-oxidative, and shear degradation of the TPV melt at the high temperature would be unacceptable.

High use-temperature polar rubbers that are resistant to hydrocarbon oils include hydrogenated nitrile-butadiene rubber (HNBR) and hydrogenated carboxylated nitrile-butadiene rubber (HXNBR). HNBR with about 33 wt% bound acrylonitrile content (T_{g} of about -27°C) offers the best oil resistance and a broad use temperature range (-30°C to 150°C), the broad use temperature being achieved by the judicious use of a non-volatile plasticizer.

However, oil-resistant TPVs have major drawbacks to achieving desirable mechanical properties and processability when compared with PP/EPDM based TPVs.

Polar plastics and polar rubbers are much less compatible than PP and EPDM. Hence a larger rubber particle size on dynamic vulcanization can be expected in the former case, leading to poorer physical properties. No "mechanical lock" (observed in the case of PP/EPDM TPVs) between the plastic phase and particulate rubber can be expected, due to poorer plastic and rubber phase compatibility, and due to much lower materials molecular weight. Hence compatibilizer formation between the rubber and plastic is necessary for low rubber particle size (improved TPV physical properties) and processability (by limiting rubber particle agglomeration under lower shear rate processing conditions versus the much higher shear rate used during TPV reactive extrusion).

The rubber phase of the TPV has to be cured using a curative that does not affect the plastic phase. In the case of PP/EPDM TPVs, cure can be carried out by decomposition of a resole type of phenolic resin that is accelerated by the use of acidic promoters such as stannous chloride. This generates a quinonemethide intermediate which cures the rubber without affecting PP. However, this curing technology adversely effects polar plastic-based TPVs, as acidic materials are polar plastic pro-degradants. Thus, resole phenolic resin rubber cure systems are not suitable for use in dynamic vulcanization of oil-resistant TPVs.

PP/EPDM TPVs can also be cured with peroxide, although peroxide does cleave PP chains to some extent. PP chain cleavage can be limited by, for example, the use of co-agents along with the peroxide, or addition of a sacrificial additive that preferentially reacts with peroxide over PP. However, very little loss in MW due to peroxide degradation can be tolerated when using polar plastics such as PBT because they have molecular weights much lower than PP. Thus, peroxide cure is unacceptable for the preparation of oil-resistant TPVs. In addition, residual peroxide in a peroxide-cured TPV may necessitate long post cure time after part fabrication to achieve suitable part stability.

Curing of acrylate rubber during the preparation of oil-resistant TPVs commonly results in the elimination of small polar condensate molecules which can lead to porous pellets that absorb water during product pelletization. Eliminating water from the pellets sufficiently is difficult, and molding of wet pellets often leads to poor fabricated part surface appearance, in addition to reducing plastic molecular weight. Further, polar condensate molecules are trapped efficiently in the polar TPV melt. Although considerable amounts volatiles are evolved by melt surface thermo-oxidative degradation during the reactive extrusion of TPVs, the surface generated volatiles are readily removed when exposed to vacuum in the extruder. Staged TPV preparation processes, although useful, are undesirable for the preparation of high temperature oil-resistant TPVs.

The creep properties and melting point of a TPV plastic phase are among the properties that influences product performance. Among the polar plastics, semi-crystalline polyesters have better creep properties than nylons due to chain slip allowed by hydrogen bonding in the latter materials. On the other hand, fluoroplastics, which are typically produced by emulsion or suspension polymerization, are advantageously available at much higher molecular weights than condensation polymers such as PBT. However, the creep properties of these materials are poorer than that of PBT.

Plastic rubber combinations such as fluoroplastic/fluoroelastomer, PBT or Nylon/fluoroelastomer, PBT/Silicone rubber have a major drawback in TPV applications: these systems are not capable of forming the a "mechanical lock" similar to that generated in PP/EPDM systems. Further, the compatibilizers are not effective to improve the adhesion between the plastic and rubber phase. And because of their low surface energy, fluoroelastomers and silicone rubber can be dispersed readily in plastic materials, but this property precludes strong adhesion between the plastic and rubber phases.

U.S. Patent No. 7,291,667 discloses the preparation of TPVs with Nylon and HXNBR in a multi-stage batch process using peroxide as a curing agent.

U.S. Patent No. 7,659,339 also discloses the preparation of TPVs manufactured using Nylon and HXNBR. The '339 patent states that the TPVs disclosed therein contain low Mooney, optionally hydrogenated carboxylated nitrile butadiene rubber, and have improved processability compared to TPVs disclosed in the '667 patent.

Processability in continuous manufacturing systems, such as those that employ a twin-screw extruder, is an important requirement for the commercial production of TPVs. Although TPVs can be prepared using batch processes, batch processes for the manufacture of TPVs are typically inefficient and the resulting TPVs are not amenable to manufacture in a more efficient continuous TPV manufacturing process.

Thus, there is a need for high temperature, oil-resistant TPVs suitable for use at temperatures of -40°C to 150°C that avoid the compositional, manufacturing, and use limitations discussed above. There is also a need for such TPVs that can be made and processed on a commercial scale using a large scale-continuous system, e.g., a single-screw or a twin-screw extruder.

### SUMMARY

Disclosed are compositions and processes for the preparation of readily processable, high-temperature, oil-resistant TPVs by the dynamic vulcanization of HXNBR in high melting point nylons, polyesters, or segmented polyester block copolymers (COPEs), using 2,2'-(1,3-phenylene)-bis-(2-oxazoline) (1,3-PBO), or 2,2'-(2,6-pyridylene)-bis-(2-oxazoline) (2,6-PyBO) as rubber curative.

The use of oxazoline curatives does not degrade the TPV plastic phase, and allows selective addition crosslinking of the rubber, thereby avoiding product process-ability problems that can be caused by volatile by-products from the curing reaction being trapped in the TPV melt. Furthermore, the curative links the plastic molecules to the rubber (compatibilizer formation) via the carboxylic acid end groups of the plastic (for polyesters and nylons) with the carboxylic acid moieties that are pendant on the rubber backbone. Compatibilizer formation enhances TPV physical properties. A plasticizer can be used to achieve process-able (low enough melt viscosity, excellent fabricated product surface appearance) for TPV compositions with plastic content of 70 weight per cent or lower, based on only the rubber and plastic in the composition. In these cases, without plasticizer, molding machines cannot fabricate the TPV melt due to high viscosity, or the fabricated product exhibits severe melt fracture. The plasticizer is preferably miscible with the TPV plastic phase only, although plasticizers that are miscible with both the TPV rubber and plastic phase are also acceptable.

As discussed above, polar plastics and polar rubbers used in the preparation of high-temperature, oil-resistant TPVs, have lower MW in comparison with PP and EPDM. Hence, during preparation of polar TPVs by reactive extrusion, precautions must be taken in order to prevent polymer degradation by thermal, thermo-oxidative, and mechanical processes. Hence tight process temperature control and achieving excellent polymer melt blending using minimal shearing of the polymer melt blend is critical. The TPVs of this invention have improved processability and can be prepared using single-screw extruders or corotating or counter rotating twin screw extruders (TSEs), for example in a continuous process suitable for large scale manufacturing, with elements that allow excellent polymer melt blending at low shear rate conditions (<5000 s⁻¹). A particularly suitable single screw extruder for preparation of the TPVs of this invention is the Buss Kneader. Here, a reciprocating single screw, where the screw shaft consists of different elements (kneading, conveying, etc.) shears the polymer melt blend by the action of the screw elements on fixed (but adjustable) pins on the extruder barrel. Thus, intense polymer melt blending can be achieved at a low shear rate (<1100 s⁻¹), resulting in excellent polymer melt temperature control. Owing to the low shear rate profile of the Buss when compared to TSEs, the former machine is much less torque limited than the latter.

In a broad aspect, this disclosure provides thermoplastic vulcanizate comprising a plastic phase and a rubber phase, wherein
a) the plastic phase comprises from 30 parts to 95 parts by weight, based on 100 parts by weight of the plastic and rubber phases, of a plastic having a melting point of 160°C to 260°C, wherein the plastic is
   i) a semi-crystalline engineering polyester,
   ii) a semi-crystalline copolyester elastomer,
   iii) a semi-crystalline aliphatic polyamide, or a mixture thereof; and
b) the rubber phase comprises from 70 parts to 5 parts, by weight based on 100 parts by weight of the plastic and rubber phases, of a hydrogenated carboxylated nitrile rubber; and
c) crosslinks between reactive groups in the hydrogenated carboxylated nitrile rubber.

In these thermoplastic vulcanizates, the crosslinks are typically formed by a reaction between an addition type curing agent and reactive groups in the hydrogenated carboxylated nitrile rubber.

In another aspect, the disclosure provides thermoplastic vulcanizates prepared by dynamically crosslinking a melt blend with an addition type curing agent, wherein the melt blend comprises a plastic phase and a rubber phase, and wherein
the plastic phase comprises from about 30 parts to about 95 parts by weight, based on 100 parts by weight of the plastic and rubber phases, of a plastic having a melting point of about 160°C to about 260°C, wherein the plastic is
i) a semi-crystalline engineering polyester;
ii) a semi-crystalline copolyester elastomer, or
iii) a semi-crystalline aliphatic polyamide, or a mixture thereof; and
the rubber phase comprises from about 70 parts to about 5 parts, by weight based on 100 parts by weight of the plastic and rubber phases, of a hydrogenated carboxylated nitrile rubber.

Preferably, the crosslinks are formed by a reaction between an addition type curing agent and reactive groups in the hydrogenated carboxylated nitrile rubber.

Preferably, the plastic phase comprises 30 parts to 70 parts or 50 parts to 70 parts by weight, based on 100 parts by weight of the plastic and rubber phases, of the plastic, ; and the rubber phase comprises from 70 parts to 30 parts or 50 parts to 30 parts, by weight based on 100 parts by weight of the plastic and rubber phases, of the hydrogenated carboxylated nitrile rubber.

Preferably, the thermoplastic vulcanizate further comprises a plasticizer and optionally wherein the plasticizer is melt miscible with the rubber phase and/or the plastic phase.

Preferably, the plasticizer is selected from polyether esters, monomeric ether esters, aliphatic polymeric esters, aromatic polymeric esters, polyesters, ester terminated poly butylene adipates, sulfonamides, and mixtures thereof.

Preferably, the amount of plasticizer in the thermoplastic vulcanizate is from 4 parts to 35 parts, 4 to 25 parts, or 8 to 20 parts, based on 100 parts by weight of the plastic and rubber phases.

Preferably, the addition type curing agent is a multifunctional oxazoline or epoxide.

Preferably, the thermoplastic vulcanizate is formed from 1 part to 15 parts, 1 part to 12 parts, or 1 part to 8 parts based on 100 parts by weight of the plastic and rubber phases, of the addition type curing agent.

Preferably, the addition type curing agent is 2,2'-(1,3-phenylene)bis(2-oxazoline), or 2,2'-(1,4-phenylene)bis(2-oxazoline), or 2,2'-(2,6-pyridylene)bis(2-oxazoline), or mixtures thereof.

Preferably, the semi-crystalline engineering polyester comprises or is derived from a poly (butylene terephthalate), poly (trimethylene terephthalate), poly (ethylene terephthalate), or a mixture thereof; the semi-crystalline copolyester elastomer comprises or is derived from crystalline segments derived from poly(butylene terephthalate), and the elastomeric segments are derived from poly (dimethylene oxide), poly (trimethylene oxide), poly (tetramethylene oxide, or mixtures thereof, and the semi-crystalline copolyester elastomer has a hardness from Shore D 70 to Shore D 85; and/or the aliphatic polyamide comprises or is derived from a polycaprolactam, polylaurolactam, poly(11-aminoundecanoic acid), a polyamide derived from hexamethylenediamine and adipic acid, poly(hexamethylene adipamide-co-caprolactam), or a mixture thereof.

Preferably, the plasticizer is a) an ester terminated poly (1,3-butylene adipate) and the thermoplastic vulcanizate comprises 4 to 20 parts, 4 to 25 parts, or 8 to 20 parts based on 100 parts by weight of the plastic and rubber phases, of the plasticizer; b) a diester terminated poly ethylene glycol, a monomeric ether ester, an aliphatic polymeric ester or an aromatic polymeric ester, and the thermoplastic vulcanizate comprises 4 to 35 parts, 4 to 25 parts, or 8 to 20 parts based on 100 parts by weight of the plastic and rubber phases, of the plasticizer; c) N-(n-butyl)benzene sulfonamide and the thermoplastic vulcanizate comprises 4 to 35 parts, 4 to 25 parts, or 8 to 20 parts based on 100 parts by weight of the plastic and rubber phases, of the plasticizer, or d) methyl 4-hydroxybenzoate and the thermoplastic vulcanizate comprises 4 to 20 parts, or 8 to 20 parts of the plasticizer.

Preferably, the hydrogenated nitrile rubber has a copolymerized nitrile content of 15 to 50 weight per cent of the rubber, and the copolymerized acid crosslinking site is 1 to 10 weight per cent of the rubber.

Preferably, the thermoplastic vulcanizate further comprises and/or is formed using a cure accelerator selected from: a) aryl phosphites, alkyl phosphites, aryl/alkyl phosphite, and mixtures thereof; or b)tris(2,4-di-t-butylphenyl) phosphite, bis(2,4-di-t-butylphenyl)pentaerythritol diphosphite, and mixtures thereof.

Preferably, the crosslinks comprise ester-amide crosslinks between reactive groups in the hydrogenated carboxylated nitrile rubber.

Preferably, the thermoplastic vulcanizate as described and claimed herein is prepared by dynamically crosslinking a melt blend with an addition type curing agent, wherein the melt blend comprises the plastic phase and the rubber phase; and wherein the crosslinks are formed by a reaction between an oxazoline curing agent and reactive groups in the hydrogenated carboxylated nitrile rubber.

According to a further aspect of the present disclosure, there is provided a thermoplastic elastomer comprising a plastic phase and a rubber phase, wherein a) the plastic phase comprises from 30 parts to 95 parts by weight, based on 100 parts by weight of the plastic and rubber phases, of a plastic having a melting point of 160°C to 260°C, wherein the plastic is i) a semi-crystalline engineering polyester, ii) a semi-crystalline copolyester elastomer, iii) a semi-crystalline aliphatic polyamide or a mixture thereof; and b) the rubber phase comprises from 70 parts to 5 parts, by weight based on 100 parts by weight of the plastic and rubber phases, of a hydrogenated carboxylated nitrile rubber; and c) optionally the thermoplastic elastomer comprises crosslinks between reactive groups in the hydrogenated carboxylated nitrile rubber.

According to a further aspect of the present disclosure, there is provided a gasket, tube, hose, seal, vibration dampener, stator, fitting, housing, case, film, shock absorber, anti-vibration mount, coupling, bushing, sleeve, bellows, foam comprising the thermoplastic vulcanizate as described and claimed herein or formed from the thermoplastic elastomer as described and claimed herein; or a tube or hose having at least one layer comprising the thermoplastic vulcanizate as described and claimed herein or formed from the thermoplastic elastomer as described and claimed herein.

According to a further aspect of the present disclosure, there is provided a process for producing a thermoplastic vulcanizate comprising mixing a composition comprising a plastic phase and a rubber phase with an addition type curing agent, wherein the mixing is carried out under conditions of shear and at a temperature above the melting point of the plastic phase, and wherein the plastic phase comprises from 30 parts to 95 parts by weight, based on 100 parts by weight of the plastic and rubber phases, of a plastic having a melting point of 160°C to 260°C, wherein the plastic is a semi-crystalline engineering polyester, a semi-crystalline copolyester elastomer, or a semi-crystalline aliphatic polyamide, or mixtures thereof; and the rubber phase comprises from 70 parts to 5 parts, by weight based on 100 parts by weight of the plastic and rubber phases, of a hydrogenated carboxylated nitrile rubber.

Preferably, the process comprises: prior to melt blending with the rubber, melt blending the plastic phase with a predetermined amount of addition type curing agent to form a blend of the curing agent and plastic; and mixing the blend of the curing agent and plastic with the rubber phase to form a blend of plastic phase and rubber phase.

Preferably, the process further comprises adding an additional addition type curing agent to the blend of rubber phase and plastic phase with continued melt mixing.

Preferably, the composition is prepared by melt bending the plastic phase with the curing agent to form a plastic phase/curing agent blend, and melt blending the plastic phase/curing agent blend with the rubber phase.

The thermoplastic elastomers are typically pre-vulcanized compositions and can be used as intermediates in the preparation of the disclosed fully vulcanized TPV products. These elastomers are pre-crosslinked compositions and are substantially free of cross-linked rubber material. The final thermoplastic vulcanizates of this disclosure can be made directly from the thermoplastic elastomers by mixing the elastomer composition with an addition-type curing agent and subjecting the resulting mixture to dynamic vulcanization, i.e., conditions of shear at a temperature above the melting point of the polyester component.

In a related aspect, this disclosure provides thermoplastic elastomers comprising a plastic phase and a rubber phase as defined above as well as an addition-type curing agent. These compositions can also be used in the manufacture of the fully vulcanized products by merely subjecting the compositions to dynamic vulcanization.

### BRIEF DESCRIPTION OF THE FIGURES

Figure 1 is a diagram of the barrel setup in the twin-screw extruder described and used in Example 1. The numbers refer to the barrels described in Example 1.

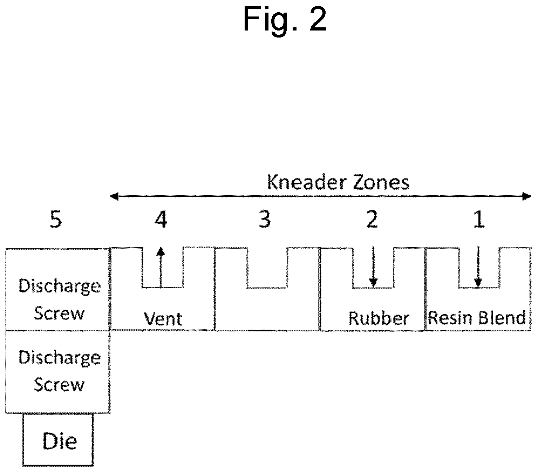

Figure 2 is a diagram of the barrel setup in the BUSS Kneader described and used in Example 8. The numbers refer to the kneader zones described in Example 8.

### DETAILED DESCRIPTION

As used herein, the term thermoplastic vulcanizate (TPV) refers a thermoplastic elastomer produced via dynamic vulcanization of a blend of a rubber phase and a thermoplastic polymer in the presence of a vulcanizing system.

The acronym "HXNBR" used herein refers to hydrogenated carboxylated nitrile butadiene rubber.

The terms semi-crystalline copolyester elastomer, segmented polyester block copolymer and COPE are used interchangeably.

As used herein, the term "dynamic vulcanization" means a vulcanization or curing process for a rubber contained in a thermoplastic vulcanizate composition, wherein the rubber is vulcanized under conditions of shear at a temperature above the melting point of the polyester component. The rubber is thus simultaneously cross-linked and typically dispersed as fine particles within the polyester matrix. Although particles are the typical morphology, other morphologies may also exist.

Thermoplastic vulcanizates typically have finely dispersed, micron-sized, crosslinked rubber particles distributed in a continuous thermoplastic matrix.

Unless otherwise specified, "parts" of a particular TPV component, e.g., plastic, rubber or curing agent, refers to parts by weight.

The disclosures of all patents and literature references identified herein are hereby incorporated by reference in their entirety.

In certain aspects, this disclosure provides thermoplastic vulcanizates wherein the plastic phase comprises about 30 parts to about 70 parts by weight, based on 100 parts by weight of the plastic and rubber phases, of the plastic, and the plastic has a melting point of about 160°C to about 260°C and is
i) a semi-crystalline engineering polyester,
ii) a semi-crystalline copolyester elastomer, or
Iv) a semi-crystalline aliphatic polyamide, or mixtures thereof; and
the rubber phase comprises from about 70 parts to about 30 parts, by weight based on 100 parts by weight of the plastic and rubber phases, of the hydrogenated carboxylated nitrile rubber.

### Thermoplastic Polymers

The thermoplastic polymers or plastics, i.e., nylons, polyesters, and COPEs, used herein preferably have melting points between about 160°C or 170°C and about 260°C. Preferred plastics for use herein include those having melting points between about 170°C and about 250°C or 260 °C. Other preferred plastics for use herein include those having melting points between about 180°C and about 250°C or 260 °C. Other preferred plastics for use herein include those having melting points between about 190°C and about 250°C or 260°C. Other preferred plastics for use herein include those having melting points between about 200°C and about 230°C, or 240°C, or 250°C or 260°C.

The amount of plastic ranges from about 30 parts to 95 parts, and the amount of HXNBR ranges from about 70 parts to about 5 parts, based on 100 parts of plastic and rubber. In particular aspects, the amount of curing agent useful herein is from about 1 part to about 15 parts based on 100 parts of plastic and rubber.

Suitable amounts of plastic (thermoplastic polymer) based on 100 parts of plastic and rubber in the TPV formulations include about 30 parts, about 35 parts, about 40 parts, about 45 parts, about 50 parts, about 55 parts, about 60 parts, about 65 parts, about 70 parts, about 75 parts, about 80 parts, about 85 parts and about 90 parts.

### Nylons

Suitable polyamides for use as the thermoplastic material in the plastic phase include semi-crystalline aliphatic polyamides (condensation polymers of aliphatic diamines with aliphatic diacids, or polymers obtained by the polymerization of an AB monomer such as caprolactam) or copolyamides thereof, having melting points between about 160°C or 170°C and about 260°C. Suitable polyamides have medium to high molecular weights, i.e., molecular weights sufficient to produce with relative viscosities between about 2 to about 4, as measured in 96 weight per cent sulfuric acid at a 1 % concentration (mass of Nylon in volume of sulfuric acid).

Particularly useful polyamides include polycondensation products of hexamethylenediamine and adipic acid (e.g., Nylon 6/6), hexamethylenediamine and 1,12-dodecanedioic acid (e.g., Nylon 6/12), and pentamethylene diamine and sebacic acid (e.g., Nylon 510). Other examples of suitable polyamide thermoplastic materials are poly(11-aminoundecanoic acid), i.e., Nylon 11, polycaprolactam, i.e., Nylon 6, polylaurolactam, i.e., Nylon 12, poly(hexamethylene adipamide-co-caprolactam), i.e., Nylon 6/66, and the product of acid-catalyzed amide formation between adiponitrile, formaldehyde, and water (Nylon 1,6). Examples of suitable polyamides are the Trogamid^{®} polyamides. Mixtures of these polyamides may suitably be used in the TPVs disclosed herein.

### Polyesters

Polyesters are condensation polymers. The various polyesters can be either aromatic or aliphatic or combinations thereof and are generally directly or indirectly derived from the reactions of diols such as glycols having a total of from 2 to 6 carbon atoms and desirably from about 2 to about 4 carbon atoms with aliphatic acids having a total of from about 2 to about 20 carbon atoms and desirably from about 3 to about 15 carbon atoms or aromatic acids having a total of from about 8 to about 15 carbon atoms.

Semi-crystalline polyesters that are produced by the condensation of aromatic diacids with aliphatic diols are most suitable for the practice of this invention. Examples are poly (butylene terephthalate) (PBT), poly (trimethylene terephthalate) (PTT) and poly (ethylene terephthalate) (PET). Although aromatic/aliphatic polyesters and copolymers thereof with a melting point of about 160°C to 260°C are preferred, also suitable are all aliphatic polyesters within the specified melting range, as for example poly (1,4-cyclohexylenedimethylene-1,4-cyclohexanedicarboxylate) that is disclosed in US 6828410. High MW polyesters are preferred. For example, PBT with Mₙ of about 50,000 and M_{w} of about 100,000 is preferably used in the products of this invention.

### Segmented Polyester Block Copolymers (COPEs)

Segmented polyester block copolymers or COPES are linear condensation multi-block copolymers consisting of alternating hard and soft blocks. Suitable segmented polyester block copolymers include segmented polyester-polyether and the like. These block copolymers contain at least one hard crystalline block of a polyester and at least one rubbery block such as a polyether derived from glycols having from 2 to 6 carbon atoms, e.g., polyethylene glycol, or from alkylene oxides having from 2 to 6 carbon atoms. For example, the hard crystalline blocks can be derived from high melting aromatic/aliphatic oligomers of (butylene terephthalate), and the soft blocks can be composed of low T_{g} oligomers of aliphatic glycols such as those derived from 1,4-butanediol or the oligomerization of tetrahydrofuran. A preferred block polyester-polyether polymer is polybutyleneterephthalate-b-polytetramethylene glycol which is available as Hytrel from DuPont. Also useful herein are the above described block copolymers where the soft blocks are derived from the oligomerization of trimethylene diol, with PBT hard blocks as described in US 7,244,790. The hard phase melting point of the COPEs of this invention can vary from 160°C to 260°C. High MW COPEs with Mₙ of about 50,000 and M_{w} of about 100,000 are preferred.

COPEs suitable for use herein are described in "Thermoplastic Elastomers", G. Holden et al eds., Hanser/Gardner Publications, Inc., Cincinnati, OH, 1996, Ch. 8.

### Rubber Polymers

### Hydrogenated (Carboxylated Nitrile Rubber): HXNBR

Hydrogenated carboxylated nitrile rubber is produced by the hydrogenation, in solution, of carboxylated nitrile rubber (XNBR). XNBR is produced by the emulsion copolymerization, generally, of three monomers, namely conjugated dienes, α,β-unsaturated nitriles, and α,β-unsaturated carboxylic acids. Suitable dienes are 1,3-butadiene, isoprene, 2,3-dimethyl-1,3-butadiene, and piperylene, with 1,3-butadiene being preferred. The preferred nitrile monomer is acrylonitrile, with methacrylonitrile and α-chloroacrylonitrile also being suitable. Preferred acid monomers are acrylic acid and methacrylic acid. Acids such as crotonic, maleic (or in the anhydride form), fumaric, or itaconic acid can also be used. The conjugated diene can vary from 50 to 80% of the polymer, the nitrile from 15 to 40%, and the acid from 1 to 10%, the percentages being by weight.

Hydrogenation of XNBR to HXNBR increases the thermal and thermo-oxidative stability of the rubber. Hence a low residual double bond (RDB) in HXNBR is preferable, the preferred RDB being between 1 to 5.

Suitable HXNBR for use herein has a ML(1+4, 100°C) (Mooney viscosity) of at least about 55. HXNBR having ML values of from about 55 to about 150, or from about 55 to 120, or from about 55 to about 100, or from about 55 to about 95, or from about 55 to about 90, or from about 55 to 80, or from about 60 to 70, or from about 60-80, or from about 70-90, or from about 70-100, or from about 70-120.

A particularly suitable HXNBR for the practice of this invention is Therban XT VP 8889, with 33 wt% acrylonitrile, about 5 wt% copolymerized methacrylic acid, the remainder consisting of hydrogenated copolymerized 1,3-butadiene units (RDB=3.5% (IR); ML (1+4, 100°C) =77). See US Patent 7,291,667.

The high acrylonitrile content of Therban XT VP 8889 allows the preparation of oil-resistant TPVs, but the relatively high rubber T_{g} (-20°C) compromises TPV low temperature performance. However, TPV low temperature performance can be improved by the use of plasticizers.

Suitable amounts of HXNBR based on 100 parts of plastic and rubber in the TPV formulations include about 5 parts, about 10 parts, about 15 parts, about 20 parts, about 25 parts, about 30 parts, about 35 parts, about 40 parts, about 45 parts, about 50 parts, about 55 parts, about 60 parts, about 65, and about 70 parts.

The thermoplastic vulcanizates of this disclosure include thermoplastic vulcanizates where greater than 80 weight per cent of the rubber is crosslinked.

The thermoplastic vulcanizates of this disclosure include thermoplastic vulcanizates wherein greater than 80 weight percent of the rubber is not soluble in a solvent that readily dissolves the un-crosslinked rubber. In other embodiments, at least about 90 weight percent of the rubber is not soluble in a solvent that readily dissolves the un-crosslinked rubber. In still other embodiments, at least about 95 weight percent of the rubber is not soluble in a solvent that readily dissolves the un-crosslinked rubber.

### Plasticizers

Thermoplastic vulcanizates disclosed herein can further comprise a plasticizer that may be melt miscible with both the rubber phase and the plastic phase. Suitable plasticizers for use herein are selected from polyether esters, monomeric ether esters, aliphatic polymeric esters, aromatic polymeric esters, polyesters, ester terminated poly butylene adipates, sulfonamides, and mixtures thereof. Plasticizers that are melt miscible with the TPV plastic phase, or rubber phase, or both, are useful in certain aspects of this disclosure. In certain embodiments, the plasticizer is not melt-miscible with either the rubber phase or the plastic phase.

The amount of plasticizer ranges from about 4 parts to about 35 parts, based on 100 parts of rubber and plastic phases in the formulation. Suitable amounts of plasticizer, based on 100 parts of rubber and plastic, in the TPV formulations are about 4 parts, about 10 parts, about 15 parts, about 20 parts, about 25 parts, about 30 parts, and about 35 parts.

In certain aspects of this disclosure, TPV formulations comprise about 40 parts to about 70 parts of plastic, and from about 60 parts to about 30 parts of HXNBR, in addition to an effective amount of a plasticizer. Effective amounts of the plasticizer are from about 4 parts or 8 parts to about 35 parts per 100 parts of rubber and plastic phases.

Examples of such formulations include those containing HXNBR and plastic at a rubber to plastic weight ratio of about 1.1 to about 1.35 (about 52-57 parts rubber to about 48-43 parts plastic) and about 4 parts to about 35 parts, based on 100 parts of the rubber and plastic phases, of a plasticizer.

In certain aspects, a plasticizer is incorporated into the TPV formulation to achieve processable (low enough melt viscosity, excellent fabricated product surface appearance) TPV compositions with plastic content of about 70 weight per cent or lower, based on only the rubber and plastic in the composition. In certain situations, at this level of plastic, lack of plasticizer results in some molding machines being incapable of fabricating the TPV melt due to high viscosity, or the fabricated product exhibits severe melt fracture. The plasticizer is preferably miscible with the TPV plastic phase only, although plasticizers that are miscible with both the TPV rubber and plastic phase are also acceptable.

### Plasticizers for Nylons

Many plasticizers that hydrogen bond with Nylons may be highly selective in being melt miscible with the plastic in comparison to HXNBR. Examples of these plasticizers include benzenesulfonamide (solid at room temperature) and various N-alkylbenzenesulfonamides (solid or liquid at room temperature). For example, N-butylbenzenesulfonamide (Uniplex 214) and N-ethyl-o/p-toluenesulfonamide (Uniplex 108) are liquids, whereas some N-alkyl-p-toluenesulfonamides are solids. Other solid plasticizers for Nylon include methyl or propyl 4-hydroxybenzoate.

When a plasticizer is preferentially melt-miscible with the TPV plastic phase only, it increases the plastic melt volume which helps in preventing rubber particle agglomeration. Prevention of rubber particle agglomeration is important when intensive melt mixing of the TPV stops as the product is pumped into the die for strand formation, and subsequent strand cutting into pellets. Thus, a molten strand with a smooth surface and no melt fracture can be produced.

Suitable plasticizers for use in TPVs of this disclosure made with Nylon are disclosed in Polymer International, 51, 40-49 (2001); Polym. Bull., 68, 1977-1988 (2012); Polym. Adv. Technol., 23, 938-945 (2012); Polym. Adv. Technol., 28, 53-58 (2017).

### Plasticizers for Polyesters

Plasticizers for PBT include 2,2-dimethylpropane diol 1,3-dibenzoate (Uniplex 512), polyethylene glycol dilaurate (Uniplex 810), and other polyethylene glycol esters such as TegMeR 804S, 809, 810, 812, and 39-N. Also useful are poly alkylene adipates of various MWs such as Paraplex A 8600, Paraplex A8210, and Paraplex A 8000 that is available from Hallstar. Particularly useful is an ester terminated poly 1,3-butylene adipate (PN-250) from Amfine that has a low freezing point (-200C) and excellent thermal and thermo-oxidative stability.

### Plasticizers for HXNBR

Many low volatility ether ester plasticizers such as TP-90B, TP-95, TP-759, TegMeR 39-N, 804S, 809, 810, and 812 that are also plasticizers for PBT are also suitable for HXNBR. Plasthall series ester plasticizers such as, Plasthall TOTM, are also useful. The structure and applications of some of these plasticizers are available in Rubber World p. 32, April 2015.

### Plasticizers for COPEs

Unlike the Nylons or polyesters of this invention, these materials are miscible only to a limited extent with plasticizers after a polymer/plasticizer melt blend crystallizes at room temperature. Hence, for TPVs with COPEs as the plastic phase, it is important that any plasticizer rejected on crystallization of the plastic phase be absorbed by the particulate rubber contained therein.

### Other Plasticizers for Nylons, Polyester, and COPEs

Also acceptable are plasticizers that are melt miscible with the TPV plastic phase, but are immiscible in the amorphous plastic phase of the TPV at room temperature, and hence may be present as sub-micron pools of liquid in the TPV plastic phase at room temperature, but show no tendency for exudation from TPV pellets or molded parts produced from the TPV.

### Addition Type Curing Agent

The hydrogenated carboxylated nitrile rubber is cured utilizing various curative compounds including oxazoline, oxazine, and imidazolines such as bisimidazoline. More specifically, the nitrile rubber phase is cured via the carboxylic acid moiety in the hydrogenated carboxylated nitrile rubber. Alternatively, the addition type curing agent can be a multifunctional epoxide.

Suitable addition-type rubber curing agents for use herein include those that do not break down the TPV plastic phase, and allows linking of the plastic and rubber macromolecules (plastic and rubber compatibilization). In addition, suitable curing agents cure the rubber without the evolution of volatile small molecules, such as water, which are detrimental to TPV fabricability.

Preferred addition curative or cross-linking agents are oxazolines or oxazines such as those having Formula A or Formula B 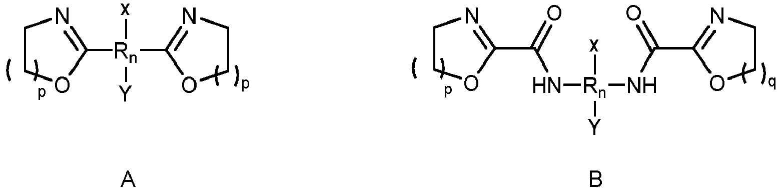 wherein R or R' is an aliphatic or aromatic hydrocarbon group such as alkylene or arylene having 1 to 24 carbon atoms optionally substituted with one or more alkyl groups having 1 to 6 carbon atoms or substituted with an aryl group having 6 to 9 carbon atoms; n is 0 or 1, when n equals 1 then X and Y are hydrogen atoms or independently an 2-oxazoline group or a 1,3-oxazine group, or a 2-oxazoline group or a 1,3-oxazine group and a hydrogen atom, with the remaining carbon atoms having hydrogen atoms thereon, p and q, independently, is 1 or 2, and when n equals 0 then R, X, and Y are nonexistent.

Further, each oxazoline group of the above formula may optionally be substituted with an alkyl of 1 to 6 carbon atoms. Further descriptions of said polyvalent oxazolines are set forth in U.S. Pat. No. 4,806,588, herein incorporated by reference.

Preferred examples of curing agents of Formulae A and B include bisoxazolines, particularly bisoxazolines of the formulas A1 and B1,

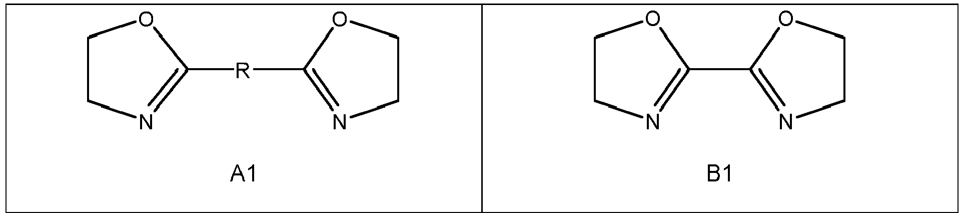

wherein R is an aliphatic, cycloaliphatic, aromatic, or heteroaromatic group, or a mixture thereof, where the total number of carbon atoms in R can vary from 1 to 24.

Particularly preferred curing agents are 2,2'-(1,3-phenylene)-bis-(2-oxazoline) (1,3-PBO), 2,2'-(2,6-pyridylene)-bis-(2-oxazoline) (2,6-PyBO), and 2,2'-(1,4-phenylene)-bis-(2-oxazoline) (1,4-PBO), and mixtures thereof.

Oxazolines such as 1,3-PBO and 2,6-PyBO react with the acid functionality that is pendent to the rubber backbone to form ester-amide cross-links. Nylons and polyesters can also get linked to the rubber by selective reaction of the curing agent with only the end acid functionality of these plastic macromolecules, that is, neither the amine end groups of nylons nor the hydroxyl end groups of polyesters exhibit notable reactivity with 1,3-PBO under typical reaction conditions.

2,6-PyBO has a faster rubber cure rate than 1,3-PBO and, therefore, can be used advantageously when rapid cure is desired.

Other curing agents can be utilized such as free radical generating compounds, but are less desirable and are therefore used in small amounts such as, for example, less than 1.0 parts by weight and desirably less than 0.5 parts by weight based upon 100 parts by weight of the hydrogenated carboxylated nitrile rubber.

Various bismaleimides as well as phenolic resins can also be used as curatives. Examples of bismaleimides include a bismaleimide based on methylene dianiline (e.g., Matrimid 5292A from Ciba-Geigy), a bismaleimide based on toluene diamine (e.g., HVA-2 from DuPont), and the like. The phenolic curing agents are well known to the art and literature and include polymers obtained by the polymerization of phenol with formaldehyde. The polymerization rate is pH dependent, with the highest reaction rates occurring at both high and low pH. A more detailed description of the preparation of phenolic resins is set forth in "Principles of Polymerization" 3.sup.rd Edition, George Odian, pages 125-131, John Wiley Sons, Inc., N.Y., N.Y., 1991, which is hereby fully incorporated by reference. Examples of specific phenolic resins include those of formula C 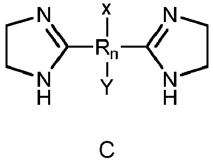 where R and n are defined as above for the multifunctional (polyvalent) oxazolines and X and Y, are a hydrogen atom, or, independently, an imidazoline group, or an imadazoline group and a hydrogen atom. A preferred multifunctional imidazoline is bismidazoline.

Still another group of addition type curing agents are the various multifunctional epoxides such as the various Shell Epon^{®} resins, epoxidized vegetable oils, tris(2,3-epoxypropyl)isocyanate, and 4,4'-methylene bis(N,N-diglycidylaniline), and multifunctional aziridines. A particularly useful epoxide for use herein as the addition type curing agent is a styrene/glycidyl methacrylate copolymer.

In certain embodiments, the curing agent, typically an excess of the curing agent relative to plastic, can be melt blended with the plastic to produce a blend of curative and plastic. The excess curing agent end-functionalizes the carboxylic acid moieties of the plastic macromolecules which compatibilizes the plastic with the rubber and limits chain extension of the plastic macromolecules.

The amount of the curative or curing agent is generally from about 1 to 15 parts, desirably from about 1 to 12 parts, or about 1 to 8 parts, by weight for every 100 parts by weight of the hydrogenated carboxylated nitrile rubber and plastic. Suitable amounts of curing agent include about 1, 2, 3, 4, 5, 6, 7, 8, 9, 10, 11, 12, 13, 14 and 15 parts by weight for every 100 parts by weight of the hydrogenated carboxylated nitrile rubber and plastic. Particularly useful amounts of curing agent range from about 1 part to about 15 parts based on 100 parts of total rubber and plastic.

In certain aspects, oxazoline curing agents are used to avoid degradation of the TPV plastic phase and allow selective addition crosslinking of the rubber. In certain aspects, oxazoline curing agents avoid product processability problems that can be caused by volatile by-products from the curing reaction being trapped in the TPV melt.

The addition curatives effect cross-linking by reacting with the carboxylic acid groups present in the nitrile rubber or double bonds of the diene hydrocarbon portion derived from the diene monomer. The amount of curatives used results in at least a partially cured nitrile rubber and preferably a fully or completely vulcanized nitrile rubber.

The terms "fully vulcanized" and "completely vulcanized" as used in the specification and claims means that the rubber component to be vulcanized has been cured to a state in which the elastomeric properties of the cross-linked rubber are similar to those of the rubber in its conventional vulcanized state, apart from the thermoplastic vulcanizate composition, or as indicated by no more change in tensile strength. The degree of cure can be described in terms of gel content or, conversely, extractable components. Alternatively, the degree of cure may be expressed in terms of cross-link density. All of these descriptions are well known in the art, for example, in U.S. Pat. Nos. 5,100,947 and 5,157,081, both of which are fully incorporated herein by this reference. By the term "partially vulcanized" (i.e., degree of cure), it is meant that about 30 percent or less and desirably about 10 percent or less by weight of a hydrogenated carboxylated nitrile rubber is soluble in methyl ethyl ketone at 80°C. By the term "fully vulcanized" (i.e., degree of cure), it is meant that about 5 percent or less of the cured carboxylated nitrile rubber is soluble in a methyl ethyl ketone at 80°C.

### Cure Accelerators

In certain aspects, the thermoplastic vulcanizates disclosed herein can further comprise a cure accelerator selected from aryl phosphites, alkyl phosphites, aryl/alkyl phosphite, and mixtures thereof. Particular cure accelerators suitable for use herein are selected from tris(2,4-di-*t*-butylphenyl) phosphite, bis(2,4-di-*t*-butylphenyl)pentaerythritol diphosphite, and mixtures thereof.

### Optional Additives

In addition to the thermoplastic polymer, HXNBR, plasticizer, and the curing agent, the thermoplastic vulcanizates disclosed herein can include various conventional additives such as reinforcing and non-reinforcing fillers, antioxidants, anti-blocking agents, antiozonants, anti-static agents, waxes, foaming agents, pigments, flame retardants and other processing aids known in the rubber and plastics compounding art. Such additives can comprise up to about 40 weight percent of the total composition, and can be in the plastic phase, the rubber phase or both. Fillers and extenders which can be utilized include conventional inorganics such as calcium carbonate, clays, silica, talc, titanium dioxide, carbon black, and the like.

### Use

The thermoplastic vulcanizate compositions of this disclosure can replace thermoset hydrogenated carboxylated nitrile rubber and are particularly useful in automobile applications. The thermoplastic vulcanizates disclosed herein may be formed into a variety of products, including for example gaskets, tubes, hose, boots, seals, vibration dampeners, stators, fittings, housings, cases, films, shock absorbers, anti-vibration mounts, couplings, bushings, sleeves, bellows, foams, etc. The thermoplastic vulcanizates disclosed herein are particularly useful for manufacturing tubes and hoses comprising at least one layer comprising thermoplastic vulcanizate. The thermoplastic vulcanizates disclosed herein are particularly useful for use in automobiles.

### Process

This invention is best practiced using equipment that can blend polymeric materials at a shear rate that permits intimate material melt blending, but at a shear rate that is low enough to prevent excessive material thermal and thermo-oxidative degradation, and also mechano-chemical degradation, due to shearing forces.

The residence time (about 1-2 minutes) of the polymer melt blend in the production equipment is also comparable to that used in commercially viable TPV manufacturing processes (See also additional information in previous Summary section).

Plastic pellets and granulated rubber (dusted with clay) are fed into the throat of a 26 mm co-rotating twin screw extruder, as per the illustrative examples of the invention. After intimate rubber and plastic melt blending is achieved, the curative is fed into the polymer melt blend as intensive mixing is continued to commence the dynamic vulcanization process. Precautions (barrel cooling, screw design) are taken to limit shear heating (due to the viscous drag of the molten plastic over the newly formed cross-linked rubber particles) in the dynamic vulcanization zone as HXNBR is broken up into cross-linked particulate rubber, about 1µm to 10µm in diameter.

In certain embodiments of the processes disclosed herein, a plasticizer as described above can be introduced as plasticizer when convenient and appropriate during the process.

Both 1,3-PBO and 2,6-PyBO react with the acid functionality that is pendent to the rubber backbone to form ester-amide cross-links. Both Nylons and polyesters also get linked to the rubber by selective reaction of the curative with only the end acid functionality of these plastic macromolecules, that is, neither the amine end groups of Nylons nor the hydroxyl end groups of polyesters exhibit notable reactivity with 1,3-PBO under the reaction conditions.

The curative may also be added as a powder, or as a powder dusting the rubber granules, to the extruder feed throat. The entire curative in the TPV formulation may also be melt blended with the plastic phase, pelletized, and the modified plastic pellets can be used for TPV preparation. When the curative is melt blended with the plastic, the excess curative ensures end-functionalization of the carboxylic acid moieties of the plastic macromolecules (for compatibilization with the rubber), and limits chain extension of the plastic macromolecules. 2,6-PyBO has the advantage of offering a faster rubber cure rate than 1,3-PBO.

Nylons, polyesters, and COPEs of this invention preferably have melting points between 160°C to 260°C, and can vary in mass from about 30 parts to 95 parts, and the HXNBR mass can vary from about 70 parts to about 5 parts, based on the total mass of plastic and rubber. The curative can vary from about 1 part to about 15 parts, based on 100 parts by weight of the rubber and the plastic phases.

In certain embodiments of the processes disclosed herein, the composition further comprises a cure accelerator selected from aryl phosphites, alkyl phosphites, aryl/alkyl phosphite, and mixtures thereof. Particular cure accelerators suitable for use in the processes disclosed herein are selected from tris(2,4-di-*t*-butylphenyl) phosphite, bis(2,4-di-*t-*butylphenyl)pentaerythritol diphosphite, and mixtures thereof.

In certain embodiments of the processes disclosed herein, the cure accelerator is added to the mixture at any time during the process.

The present invention will be better understood by reference to the following examples, which serve to illustrate, but not limit, the practice of this invention.

### MATERIALS

**RUBBER**

| **Trade Name** | **Description** |
|---|---|
| Therban XT VP 8889 | ARLANXEO: (Baled rubber) Hydrogenated (carboxylated nitrile) rubber. |
| | 33 wt% Acrylonitrile, about 5 wt% copolymerized methacrylic acid, remainder hydrogenated copolymerized 1,3-butadiene units. 3.5 % residual double bonds (IR). ML(1+4, 100°C)=77 |

**PLASTIC MATERIALS**

| **Trade Name** | **Description** |
|---|---|
| Ultramid C33 01 | BASF: (Pellets) Nylon 6/66 Copolymer, m.p. =196°C, 6/66 monomer ratio: 85/15, Low molecular weight product, relative viscosity (1wt% in 96 wt% H₂SO₄ at 23°C): 2.5 (US 9670348 B2). |
| Ultramid B33 01 | BASF: (Pellets) Nylon 6, m.p. =220°C, Intermediate molecular weight product, relative viscosity (1wt% in 96 wt% H₂SO₄ at 23°C): 3.3. |
| Ultramid B27 E 01 | BASF: (Pellets) Nylon 6, m.p. =220°C, Lower molecular weight product, relative viscosity (1wt% in 96 wt% H₂SO₄ at 23°C): 2.7. |
| Rilsamid AESNO TL | Arkema: (Pellets) Nylon 12, m.p. = 177°C, high viscosity product, Melt Flow Rate (235°C, 5 kg) = 8 cm³/10min |
| Rilsamid AMNO P40 TLD | Arkema: (Pellets) Nylon 12, m.p. = 173°C, natural polyamide grade, Melt Flow Rate (235°C, 2.16 kg) = 51 cm³/10min |
| Valox 315 | SABIC: (Pellets) Poly(butylene terephthalate) Melt Flow Rate (cm³/10 minat250°C/2.16 kg): 9, m.p.=223°C. |

**Processing Aid**

| **Trade Name** | **Description** |
|---|---|
| Bondyram 5108 | POLYRAM: (Pellets) High density polyethylene-g-maleic anhydride (0.9 wt%), Melt Flow Rate (190°C, 2.16 kg) = 3 cm³/10min |
| L4180 | Optimized Grafts: (Pellets) Linear-low density polyethylene-g-maleic anhydride (2.0-3.0 wt%), Melt Flow Rate (190°C, 2.16 kg) = 1.7 cm³/10min |

**PLASTICIZERS**

| **Trade Name** | **Description** |
|---|---|
| Uniplex 214 | LANXESS: (Liquid) N-n-butylbenzene sulfonamide, b.p. 314°C (BBSA). |
| TegMeR 810 | HALLSTAR: (Liquid) Polyethylene glycol di-2-ethylhexyl ester, b.p. =300°F |
| PN-250 | AMFINE: (liquid) Ester terminated poly (1,3-butylene) adipate. Freezing point: -20°C. TGA (Air): 10°C/min heating rate, 5 wt% loss by 278°C. |

**CURATIVE**

| **Trade Name** | **Description** |
|---|---|
| 1,3-PBO | EVONIK: (Powder) 2,2'-(1,3-Phenylene)bis (oxazoline-2), m.p.= 147°C-151°C. |

**ANTIOXIDANT**

| **Trade Name** | **Description** |
|---|---|
| Antioxidant 405 | AKROCHEM: (Powder) 4,4'-Bis-(α,α-dimethylbenzyl)diphenylamine |
| Irganox B225 | BASF: (Powder) Blend of Irgafos 168 and Irganox 1010. Irgafos 168 - Tris(2,4-ditert-butylphenyl) phosphite. Irganox 1010 - Pentaerythritol tetrakis(3-(3,5-di-tert-butyl-4-hydroxyphenyl) propionate) |

**Reodorant**

| **Trade Name** | **Description** |
|---|---|
| RODO 0 | Vanderbilt Chemicals, LLC: (Liquid) Deodorant, essential oil blend |

**Thermoplastic Vulcanizate**

| **Trade Name** | **Description** |
|---|---|
| Zeotherm 131-90B | ZEON Chemicals: (Pellets) Plasticized Nylon/ACM TPV |

The Nylon or PBT/HXNBR TPVs of this disclosure can be either compounded in a batch mixer (e.g. RSI's Techmix 6) or in a continuous twin-screw extruder (e.g. Coperion ZSK 26) or a reciprocating kneader (e.g. BUSS Kneader MX-30).

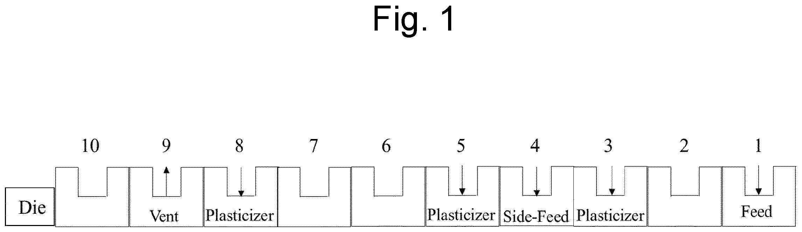

The Nylon or PBT/HXNBR TPVs of this invention were reactively compounded on a ZSK26 mm, 10-barrel, co-rotating, Coperion two-lobe twin screw extruder (L/D = 40, FIGURE 1). The maximum torque per screw shaft for this machine is 106 Nm, the maximum allowable horsepower is 36 HP, and the maximum allowable screw speed is 1200 RPM.

The barrels of this extruder are:
Barrel #1 (Unheated): Conveying elements
Barrel #s 2 -3: Kneading elements to melt plastic materials and to produce an intimate rubber and plastic melt blend.
Barrel #s 4-8: Dynamic vulcanization zone: a combination of kneading elements ensures intensive polymer melt blending during dynamic vulcanization, while limiting rise in polymer melt blend temperature and pressure.
Barrel #s 9-10: Conveying elements.
Die: 3-hole

Material is fed into the extruder at an appropriate feed rate and screw speed selected to permit sufficient residence time for dynamic vulcanization to take place.

Plastic pellets and clay-dusted granulated rubber are fed into the hopper attached to barrel #1. Curing agent, 1,3-PBO, and Antioxidant 405, both as powders, are either fed together into barrel #4 via a side feeder or antioxidant into barrel #1 and curative into the melt blend of plastic/curative (prepared as described below).

Barrel temperatures are selected based on melting points and/or softening points of the plastic and other TPV components. Barrel temperatures should be adjusted to avoid component decomposition.

After extrusion, strands are water cooled, pelletized, and dried.

Barrels #4 and #9 are vented to the atmosphere, and the screw design facilitates the formation of a melt seal on both sides of these barrels.

### Preparation of plastic pellets formed from a blend of curing agent and plastic

Melt blends of thermoplastic pellets and the curative powder are made with a low intensity mixing screw, with barrel set temperatures low enough to just melt the resin and mix with the powder. Plastic pellets are fed into the extruder feed throat, while the powder is added though the side feeder in barrel #4.

### Single screw extrusion

TPV pellets are extruded into tapes using a single screw extruder, for physical property and process-ability testing. Tensile dumbbells are cut from the tapes. TPV pellets are also injection molded into tensile bars, flex bars, and compression set buttons.

A Brabender single screw extruder (L/D =25, 3/4" screw) is used and connected to an RS-5000 (RSI) torque rheometer for temperature and torque control. The extruder includes three heated zones (barrels set at 235°C), with the die temperature set at 245°C. The screw consisted of a small Maddock mixing section, with the remaining sections being built-up of conveying elements.

### Injection Molding

A Sumitomo Systec 90-310 machine having three heated zones (barrel set temperatures: 235°C, 240°C, and 245°C, with nozzle set at 250°C is used for injection molding. Screw speed is 150 rpm, with different formulation dependent holding pressures, typically between 11-17 MPa.

### Laboratory Batch Mixer

Techmix 6 (RSI) or Haake Rheomix^{™} 3000 (Thermofisher) mixer with three heating zones is used and connected to an ATR Plasti-Corder (C.W. Brabender) torque rheometer for temperature and torque control. The three zones and the stock temperature are set at the temperatures above the melting point of the plastic phase. The mixing conditions are as follows: 5-15 minutes of total mixing time, 65% fill factor, 50-150 RPM rotor speed for Banbury rotors. The plastic and the rubber are first added to the mixer and then the curative, the antioxidant, the plasticizer, and the other components (if any) can be added at any time during the mixing process.

### Compression Molding Machine

A Wabash MPI's Genesis Series Hydraulic Press with heated and water-cooled steel platens is used for compression molding the samples into plaques. The TPV sample is first pressed for 2-5 minutes between the heated platens at temperatures above the melting point of the plastic phase, and for 2-5 minutes between the water-cooled plates.

### Property Testing

Tensile (5 specimens), flexural modulus (3 specimens), hardness (5 measurements), and compression set (3 specimens) tests are conducted as per ASTM D638, ASTM D790, ASTM D2240, and ASTM D395 respectively. In all cases, the median test value is reported.

### Example 1

BBSA-plasticized TPV formulations compounded from Ultramid C33 01 (Nylon 6/66) and HXNBR, with 1,3-PBO as curing agent, with and without a maleic anhydride grafted high density polyethylene (Bondyram 5108) as process aid, are shown below in Table 1. These TPVs are prepared using the plastic pellets formed from a blend of curing agent and plastic described above. The properties of these formulations are also presented in Table 1.

All quantities shown in the tables are weight percentages unless otherwise specified. Although processing aids such as Bondyram 5108 can be considered plastic materials, they are not counted in the calculations of the relative amounts of plastic in the formulations described below.

**Table 1. Formulations in Weight % for Ultramid C33 01/HXNBR TPVs Using Ultramid C33 01/PBO Blend.**

| | **Thermoplastic Vulcanizate (TPV) Formulation** | | | |
|---|---|---|---|---|
| **Formulation No.** | **1** | **2** | **3** | **4** |
| Ultramid C33 01 + PBO Blend | 38.95 + 4.76 | 37.14 + 4.54 | 36.44 + 4.45 | 34.84 + 4.26 |
| HXNBR | 47.62 | 45.40 | 44.53 | 42.58 |
| Antioxidant 405 | 1.73 | 1.65 | 1.62 | 1.55 |
| Bondyram 5108 | 0.00 | 4.67 | 0.00 | 4.38 |
| BBSA | 6.93 | 6.60 | 12.96 | 12.39 |
| Total | 100.00 | 100.00 | 100.00 | 100.00 |

| **Property** | | | | |
|---|---|---|---|---|
| Tape Extruded: Tensile Strength at RT (MPa) | 37.95 | 36.28 | 36.60 | 33.63 |
| Tape Extruded: Elongation at RT (%) | 307.10 | 310.70 | 300.30 | 297.70 |
| Injection Molded: Tensile Strength at RT (MPa) | 24.29 | 22.32 | 22.15 | 20.34 |
| Injection Molded: Elongation at RT (%) | 107.40 | 96.10 | 109.80 | 134.80 |
| Injection Molded: Tensile Strength at 150°C (MPa) | 5.85 | 5.24 | 5.28 | 5.28 |
| Injection Molded: Elongation at 150°C (%) | 45.70 | 36.70 | 39.70 | 39.70 |
| Injection Molded: Flexural Modulus at RT (MPa) | 361.64 | 367.84 | 187.30 | 190.28 |
| Injection Molded: Compression Set at 150°C, 70 hr (%) | 86.35 | 85.04 | 84.78 | 88.69 |

Processing conditions for the TPV formulations of Table 1 are shown below in Table 2. The results in Table 1 demonstrate that use of a process aid (Bondyram 5108) does not impact the physical properties of the TPV. Further, as shown below in Table 2, use of the process aid does not impact TPV processability.

**Table 2. Twin-Screw Processing Conditions for Formulations 1 through 4.**

| | **Thermoplastic Vulcanizate (TPV) formulation** | | | |
|---|---|---|---|---|
| **Formulation No.** | **1** | **2** | **3** | **4** |
| Screw Speed (RPM) | 100-300 | 100-300 | 100-300 | 100-300 |
| Feed rate (Ib/hr) | 15-40 | 15-40 | 15-40 | 15-40 |
| Average Torque (%) | 84 | 86 | 89 | 88 |

### Example 2

Preparation of TPV formulations to have compositions similar to those set forth in Table 1 above but without plasticizer results in materials that exhibited severe melt fracture which caused broken TPV strands to exit the die, regardless of whether the formulations included Bondyram 5108 or additional plastic (i.e., Nylon (45 parts)/HXNBR(55 parts)). In addition, during compounding with the ZSK 26 mm twin screw extruder, the maximum torque was reached. However, use of an extruder such as, for example, a Buss kneader, produces an acceptable TPV melt with these formulations.

### Example 3

Plasticized TPV formulations compounded from Poly(butylene terephthalate) (PBT, 45 parts) and HXNBR (55 parts), with 1,3-PBO as curing agent, with and without a maleic anhydride grafted high density polyethylene (Bondyram 5108) as process aid, are shown below in Table 3. These TPVs are prepared using the plastic pellets formed from a blend of curing agent and plastic described above. The formulations, physical properties, and processing conditions of PBT/HXNBR TPVs are shown below in Tables 3 and 4.

**Table 3. Formulations in Weight% for Valox 315/XHNBR TPVs Using Valox 315/PBO Blend.**

| | **Thermoplastic Vulcanizate (TPV) Formulation** | | | |
|---|---|---|---|---|
| **Formulation No.** | **5** | **6** | **7** | **8** |
| Valox 315 + PBO Blend | 36.43 + 4.45 | 34.84 + 4.26 | 38.96 + 4.76 | 37.14 + 4.54 |
| HXNBR | 44.53 | 42.58 | 47.62 | 45.40 |
| Antioxidant 405 | 1.62 | 1.55 | 1.73 | 1.65 |
| Bondyram 5108 | 0.00 | 4.38 | 0.00 | 4.67 |
| TegMeR 810 | 12.96 | 12.39 | 0.00 | 0.00 |
| PN-250 | 0.00 | 0.00 | 6.93 | 6.60 |
| Total | 100.00 | 100.00 | 100.00 | 100.00 |

| **Property** | | | | |
|---|---|---|---|---|
| Tape Extruded: Tensile Strength at RT (MPa) | 16.75 | 18.3 | 20.95 | 23.30 |
| Tape Extruded: Elongation at RT (%) | 220.70 | 233.60 | 239.60 | 270.00 |
| Injection Molded: Tensile Strength at RT (MPa) | 11.82 | 13.28 | 15.37 | 14.63 |
| Injection Molded: Elongation at RT (%) | 89.30 | 90.70 | 99.90 | 93.30 |
| Injection Molded: Tensile Strength at 150°C (MPa) | 4.12 | 4.13 | 4.89 | 4.21 |
| Injection Molded: Elongation at 150°C (%) | 31.60 | 35.60 | 39.50 | 37.00 |
| Injection Molded: Flexural Modulus at RT (MPa) | 105.51 | 124.46 | 199.10 | 195.72 |
| Injection Molded: Compression Set at150°C, 70 hr (%) | 63.85 | 67.69 | 63.81 | 64.49 |

**Table 4. Twin-Screw Processing Conditions for Formulations 5 through 8.**

| | **Thermoplastic Vulcanizate (TPV) Formulation** | | | |
|---|---|---|---|---|
| **Formulation No.** | **5** | **6** | **7** | **8** |
| Screw Speed (RPM) | 100-300 | 100-300 | 100-300 | 100-300 |
| Feed rate (Ib/hr) | 15-40 | 15-40 | 15-40 | 15-40 |
| Average Torque (%) | 90 | 87 | 86 | 88 |

The use of the process aid (Bondyram 5108) neither impacts TPV physical properties (Table 3) nor process-ability (See machine torque listed in Table 4).

### Example 4

Preparation of TPV formulations to have compositions similar to those set forth in Table 3 above but without plasticizer results in materials that exhibited severe melt fracture which caused broken TPV strands to exit the die, regardless of whether the formulations included Bondyram 5108 or additional plastic (i.e., PBT(45 parts)/XHNBR(55 parts)). In addition, during compounding with the ZSK 26 mm twin screw extruder, the maximum torque was reached. However, use of an extruder such as, for example, a Buss kneader, produces an acceptable TPV melt with these formulations.

### Example 5

Plasticized TPV formulations compounded from Poly(butylene terephthalate) (PBT, 45 parts) and HXNBR (55 parts), with 1,3-PBO as curing agent, with and without a maleic anhydride grafted high density polyethylene (Bondyram 5108) as process aid, are prepared to have the compositions shown below in Table 5. The TPV formulations are prepared via side-feed delivery (barrel 4) of the curing agent to the extruder so that it is incorporated into a melt blend of the PBT and the HXNBR. The formulations and physical properties of the resulting PBT/HXNBR TPVs are shown below in Table 5.

**Table 5. Formulations in Weight% for Valox 315/HXNBR TPVs Without Using Valox 315/PBO Blend.**

| | **Thermoplastic Vulcanizate (TPV) Formulation** | | | |
|---|---|---|---|---|
| **Formulation No.** | **9** | **10** | **11** | **12** |
| Valox 315 | 36.44 | 34.84 | 38.96 | 37.14 |
| HXNBR | 44.53 | 42.58 | 47.62 | 45.40 |
| PBO | 4.45 | 4.26 | 4.76 | 4.54 |
| Antioxidant 405 | 1.62 | 1.55 | 1.73 | 1.65 |
| Bondyram 5108 | 0.00 | 4.38 | 0.00 | 4.67 |
| TegMeR 810 | 12.96 | 12.39 | 0.00 | 0.00 |
| PN-250 | 0.00 | 0.00 | 6.93 | 6.60 |
| Total | 100.00 | 100.00 | 100.00 | 100.00 |

| **Property** | | | | |
|---|---|---|---|---|
| Tape Extruded: Tensile Strength at RT (MPa) | 16.64 | 19.25 | 24.61 | 20.58 |
| Tape Extruded: Elongation at RT (%) | 206.90 | 235.80 | 268.70 | 237.40 |
| Injection Molded: Tensile Strength at RT (MPa) | 11.91 | 12.22 | 14.78 | 14.11 |
| Injection Molded: Elongation at RT (%) | 85.20 | 83.80 | 96.30 | 81.40 |
| Injection Molded: Tensile Strength at 150°C (MPa) | 3.90 | 3.91 | 4.70 | 4.22 |
| Injection Molded: Elongation at 150°C (%) | 28.80 | 35.20 | 37.90 | 36.50 |
| Injection Molded: Flexural Modulus at RT (MPa) | 95.04 | 115.77 | 182.86 | 185.07 |
| Injection Molded: Compression Set at 150°C, 70 hr (%) | 61.51 | 62.23 | 61.80 | 62.21 |

**Table 6. Twin-Screw Processing Conditions for Formulations 9 through 12.**

| | **Thermoplastic Vulcanizate (TPV) Formulation** | | | |
|---|---|---|---|---|
| **Formulation No.** | **9** | **10** | **11** | **12** |
| Screw Speed (RPM) | 100-300 | 100-300 | 100-300 | 100-300 |
| Feed rate (Ib/hr) | 15-40 | 15-40 | 15-40 | 15-40 |
| Average Torque (%) | 83 | 90 | 91 | 92 |

Tables 5 and 6 demonstrate that the formulations of Table 3 can be produced with 1,3-PBO being side-fed into the extruder, with similar outcomes in physical properties and process-ability.

### Example 6

Preparation of TPV formulations to have compositions similar to those set forth in Table 5 above but without plasticizer results in materials that exhibited severe melt fracture which caused broken TPV strands to exit the die, regardless of whether the formulations included Bondyram 5108 or additional plastic (i.e., PBT(45 parts)/XHNBR(55 parts)). In addition, during compounding with the ZSK 26 mm twin screw extruder, the maximum torque was reached. However, use of an extruder such as, for example, a Buss kneader, produces an acceptable TPV melt with these formulations.

### Example 7

Plasticized TPV formulations compounded from Poly(butylene terephthalate) (PBT, 95 parts) and HXNBR (5 parts), with 1,3-PBO as curing agent, without using any processing aid, are prepared to have the compositions shown below in Table 7. Also, shown are the plasticized TPV formulations compounded from Poly(butylene terephthalate) (PBT, 70 parts) and HXNBR (30 parts), with 1,3-PBO as curing agent, without using any processing aid, which are prepared to have the compositions shown below in Table 7. The TPV formulations are prepared via side-feed delivery (barrel 4) of the curing agent to the extruder so that it is incorporated into a melt blend of the PBT and the HXNBR. The formulations and physical properties of the resulting PBT/HXNBR TPVs are shown below in Table 7.

**Table 7. Formulations in Weight% for Valox 315/HXNBR TPVs Without Using Any Processing Aid.**

| | **Thermoplastic Vulcanizate (TPV) Formulation** | | | |
|---|---|---|---|---|
| **Formulation No.** | **13** | **14** | **15** | **16** |
| Valox 315 | 86.76 | 85.59 | 62.22 | 59.83 |
| HXNBR | 4.57 | 4.50 | 26.67 | 25.64 |
| PBO | 0.91 | 1.80 | 1.33 | 2.56 |
| Antioxidant 405 | 0.46 | 0.9 | 2.67 | 5.13 |
| PN-250 | 7.31 | 7.21 | 7.11 | 6.84 |
| Total | 100.00 | 100.00 | 100.00 | 100.00 |

| **Property** | | | | |
|---|---|---|---|---|
| Tape Extruded: Tensile Strength at RT (MPa) | 30.20 | ND* | 32.82 | 28.07 |
| Tape Extruded: Elongation at RT (%) | 195.00 | ND | 289.00 | 272.00 |
| Injection Molded: Tensile Strength at RT (MPa) | 42.13 | 41.55 | 32.25 | 31.70 |
| Injection Molded: Elongation at RT (%) | 213.30 | 227.80 | 185.30 | 209.50 |
| Injection Molded: Tensile Strength at 150°C (MPa) | 23.36 | 22.92 | 14.40 | 13.00 |
| Injection Molded: Elongation at 150°C (%) | 301.60 | 323.00 | 194.50 | 207.70 |
| Injection Molded: Flexural Modulus at RT (MPa) | 1428.78 | 1129.79 | 667.49 | 581.83 |
| Injection Molded: Compression Set at 150°C, 70 hr (%) | 89.85 | 90.47 | 80.33 | 82.52 |
| Hardness, Instantaneous (Shore A) | 88.40 | 90.70 | 93.40 | 92.40 |
| Hardness, Instantaneous (Shore D) | 68.30 | 69.30 | 57.90 | 57.20 |

| | | | | |
|---|---|---|---|---|
| * Not determined | | | | |

**Table 8. Twin-Screw Processing Conditions for Formulations 13 through 16.**

| | **Thermoplastic Vulcanizate (TPV) Formulation** | | | |
|---|---|---|---|---|
| **Formulation No.** | **13** | **14** | **15** | **16** |
| Screw Speed (RPM) | 100-300 | 100-300 | 100-300 | 100-300 |
| Feed rate (Ib/hr) | 30-60 | 30-60 | 30-60 | 30-60 |
| Average Torque (%) | 80 | 79 | 87 | 77 |

Tables 7 and 8 demonstrate the formulations and the properties for the higher amount of plastic (PBT) and the lower amount of rubber (HXNBR), without using the processing aid.

### Example 8

Plasticized TPV formulations compounded from Ultramid B33 01 (Nylon 6, 95 parts) and HXNBR (5 parts), with 1,3-PBO as curing agent, without using any processing aid, are prepared to have the compositions shown below in Table 9. Also, shown are the plasticized TPV formulations compounded from Ultramid B33 01 (Nylon 6, 70 parts) and HXNBR (30 parts), with 1,3-PBO as curing agent, without using any processing aid, are prepared to have the compositions shown below in Table 9. The TPV formulations are prepared via side-feed delivery (barrel 4) of the curing agent to the extruder so that it is incorporated into a melt blend of the PBT and the HXNBR. The formulations and physical properties of the resulting PBT/HXNBR TPVs are shown below in Table 9.

**Table 9. Formulations in Weight% for Ultramid B33 01/HXNBR TPVs Without Using Any Processing Aid.**

| | **Thermoplastic Vulcanizate (TPV) Formulation** | | | |
|---|---|---|---|---|
| **Formulation No.** | **17** | **18** | **19** | **20** |
| Ultramid B33 01 | 83.70 | 82.61 | 61.14 | 58.82 |
| HXNBR | 4.41 | 4.35 | 26.20 | 25.21 |
| PBO | 0.88 | 1.74 | 1.31 | 2.52 |
| Antioxidant 405 | 0.44 | 0.87 | 2.62 | 5.04 |
| BBSA | 10.57 | 10.43 | 8.73 | 8.40 |
| Total | 100.00 | 100.00 | 100.00 | 100.00 |

| **Property** | | | | |
|---|---|---|---|---|
| Tape Extruded: Tensile Strength at RT (MPa) | 74.17 | 74.80 | 60.05 | 54.55 |
| Tape Extruded: Elongation at RT (%) | 285.00 | 304.00 | 287.00 | 279.00 |
| Injection Molded: Tensile Strength at RT (MPa) | 61.08 | 54.43 | 45.89 | 40.72 |
| Injection Molded: Elongation at RT (%) | 158.10 | 171.50 | 128.00 | 119.70 |
| Injection Molded: Tensile Strength at 150°C (MPa) | 32.01 | 58.11 | 16.26 | 14.87 |
| Injection Molded: Elongation at 150°C (%) | 292.40 | 310.70 | 103.20 | 107.20 |
| Injection Molded: Flexural Modulus at RT (MPa) | 1160.41 | 1296.44 | 926.74 | 903.05 |
| Injection Molded: Compression Set at150°C, 70 hr (%) | 89.31 | 90.35 | 94.09 | 96.76 |
| Hardness, Instantaneous (Shore A) | 87.60 | 84.70 | 89.00 | 91.20 |
| Hardness, Instantaneous (Shore D) | 65.90 | 65.40 | 59.40 | 62.20 |

**Table 10. Twin-Screw Processing Conditions for Formulations 17 through 20.**

| | **Thermoplastic Vulcanizate (TPV) Formulation** | | | |
|---|---|---|---|---|
| **Formulation No.** | **17** | **18** | **19** | **20** |
| Screw Speed (RPM) | 100-300 | 100-300 | 100-300 | 100-300 |
| Feed rate (Ib/hr) | 30-60 | 30-60 | 30-60 | 30-60 |
| Average Torque (%) | 90 | 86 | 87 | 79 |

Tables 9 and 10 demonstrate the formulations and the properties for the higher amount of plastic (Nylon 6) and the lower amount of rubber (HXNBR), without using the processing aid.

### Example 9

Plasticized TPV formulations compounded from Poly(butylene terephthalate) (PBT, 30 parts) and HXNBR (70 parts), with 1,3-PBO as curing agent, without using any processing aid, are prepared to have the compositions shown below in Table 11. The TPV formulations are prepared in the laboratory batch mixer. The formulations and physical properties of the resulting PBT/HXNBR TPVs are shown below in Table 11.

**Table 11. Formulations in Weight% for Valox 315/HXNBR TPVs Without Using Any Processing Aid.**

| | **Thermoplastic Vulcanizate (TPV) Formulation** | |
|---|---|---|
| **Formulation No.** | **21** | **22** |
| Valox 315 | 24.90 | 25.21 |
| HXNBR | 58.09 | 58.82 |
| PBO | 2.49 | 1.68 |
| Antioxidant 405 | 1.24 | 0.84 |
| TegMeR 810 | 13.28 | 13.45 |
| Total | 100.00 | 100.00 |

| **Property** | | |
|---|---|---|
| Compression Molded: Tensile Strength at RT (MPa) | 8.12 | 8.02 |
| Compression Molded: Elongation at RT (%) | 124.70 | 147.20 |
| Hardness, Instantaneous (Shore A) | 76.20 | 77.80 |
| Hardness, Instantaneous (Shore D) | 30.80 | 31.00 |

Table 11 demonstrates the formulations and the properties for the higher amount of rubber (HXNBR) and the lower amount of plastic (PBT), without using the processing aid.

### Example 10

Plasticized TPV formulations compounded from Ultramid B33 01 (Nylon 6, 30 parts) and HXNBR (70 parts), with 1,3-PBO as curing agent, without using any processing aid, are prepared to have the compositions shown below in Table 12. The TPV formulations are prepared in the laboratory batch mixer. The formulations and physical properties of the resulting PBT/HXNBR TPVs are shown below in Table 12.

**Table 12. Formulations in Weight% for Ultramid B33 01/HXNBR TPVs Without Using Any Processing Aid.**

| | **Thermoplastic Vulcanizate (TPV) Formulation** | |
|---|---|---|
| **Formulation No.** | **23** | **24** |
| Valox 315 | 24.90 | 25.21 |
| HXNBR | 58.09 | 58.82 |
| PBO | 2.49 | 1.68 |
| Antioxidant 405 | 1.24 | 0.84 |
| BBSA | 13.28 | 13.45 |
| Total | 100.00 | 100.00 |

| **Property** | | |
|---|---|---|
| Compression Molded: Tensile Strength at RT (MPa) | 10.40 | 9.24 |
| Compression Molded: Elongation at RT (%) | 117.20 | 120.40 |
| Hardness, Instantaneous (Shore A) | 79.60 | 79.30 |
| Hardness, Instantaneous (Shore D) | 33.90 | 35.90 |

Table 12 demonstrates the formulations and the properties for the higher amount of rubber (HXNBR) and the lower amount of plastic (Nylon 6), without using the processing aid.

### Example 11

Plasticized TPV formulations compounded from different Nylons at a rubber/plastic ratio of 60/40, with 1,3-PBO as curing agent, without using any processing aid, are prepared to have the compositions shown below in Table 13. The TPV formulations are prepared in a laboratory batch mixer. The formulations and physical properties of the resulting PBT/HXNBR TPVs are shown below in Table 13.

**Table 13. Formulations in Weight% for Different Nylons/HXNBR TPVs (No Processing Aid).**

| | **Thermoplastic Vulcanizate (TPV) Formulation** | | |
|---|---|---|---|
| **Formulation No.** | **25** | **26** | **27** |
| Ultramid B33 01 (PA6) | 31.75 | - | - |
| Rilsamid AESNO TL (PA12) | - | 31.75 | - |
| Rilsamid AMNO P40 TLD (Plasticized PA12) | - | - | 37.74 |
| HXNBR | 47.62 | 47.62 | 56.60 |
| PBO | 3.17 | 3.17 | 3.77 |
| Antioxidant 405 | 1.59 | 1.59 | 1.89 |
| BBSA | 15.87 | 15.87 | - |
| Total | 100.00 | 100.00 | 100 |

| **Property** | | | |
|---|---|---|---|
| Compression Molded: Tensile Strength at RT (MPa) | 16.93 | 16.66 | 21.72 |
| Compression Molded: Elongation at RT (%) | 117.00 | 146.90 | 173.80 |
| Hardness, Instantaneous (Shore A) | 93.00 | 88.50 | 93.30 |

Formulation 27 has greater tensile strength than and elongation and hardness values similar to the corresponding values disclosed for Inventive Example 4 of U.S. Patent No. 7,659,339. Inventive Example 4 of the '339 patent was a 60/40 HXNBR/Nylon formulation cured with peroxide and is disclosed as having: tensile strength of 19 MPa, elongation of 206%, and Shore A hardness of 91.

Table 13 demonstrates that that the properties of Nylon/HXNBR TPVs can be altered by using different grades of Nylon with different properties.

### Example 12

TPV formulations 28, 29, 30, 31, and 32 are compounded from Poly(butylene terephthalate) (PBT) or Nylon 6 and HXNBR at various plastic/HXNBR ratios, with 1,3-PBO as curing agent, and have the compositions shown below in Table 14. Table 14 shows the properties of 1,3-PBO cured Valox 315(64 Parts)/HXNBR(36 Parts), Valox 315(50)/HXNBR(50), Ultramid B33 01(60)/HXNBR(40), Ultramid B33 01(50)/HXNBR(50), and Ultramid B27 E 01(45)/HXNBR(55) TPVs, formulations 28, 29, 30, 31, and 32, respectively. The properties of these TPV formulations are compared in Table 14 to the properties of a commercially available Nylon/ACM TPV (Zeotherm 131-90B).

**Table 14. Formulations in Weight% and Properties for HXNBR TPVs Compared to Zeotherm 131-90B.**

| | **Thermoplastic Vulcanizate (TPV) formulation** | | | | | |
|---|---|---|---|---|---|---|
| **Formulation no.** | **28** | **29** | **30** | **31** | **32** | |
| Plastic phase/rubber phase (parts by weight based on 100 parts of rubber and plastic phases) | Valox 315(64)/HX NBR (36) | Valox 315(50)/HX NBR (50) | Ultramid B33 01 (60)/HX NBR(40) | Ultramid B33 01 (50)/HX NBR(50) | Ultramid B27 E 01 (45)/HX NBR(55) | Zeotherm 131-90B |
| Valox 315 | 54.12 | 40.77 | - | - | - | N/A |
| Ultramid B 33 01 | - | - | 48.38 | 40.82 | - | N/A |
| Ultramid B 27 E 01 | - | - | - | - | 38.96 | |
| HXNBR | 30.44 | 40.77 | 32.26 | 40.82 | 47.62 | N/A |
| L4180 | 4.79 | 4.62 | - | - | - | N/A |
| 1,3-PBO | 3.04 | 4.07 | 3.23 | 4.08 | 4.76 | N/A |
| Antioxidant 405 | 1.69 | 2.27 | 1.61 | 2.04 | 1.73 | N/A |
| Irganox B225 | 0.42 | 0.56 | - | - | - | N/A |
| PN-250 | 5.07 | 6.93 | - | - | - | N/A |
| Uniplex 214 | - | - | 14.52 | 12.24 | 6.93 | N/A |
| Rodo 0 | 0.42 | 0.42 | - | - | - | N/A |
| Total | 100 | 100 | 100 | 100 | 100 | N/A |

| **Property** | | | | | | |
|---|---|---|---|---|---|---|
| Injection Molded: Tensile Strength at RT (MPa) | 27.88 | 17.72 | 28.92 | 24.32 | 26.11 | 18.37 |
| Injection molded: Elongation at RT (%) | 170.40 | 105.70 | 138.00 | 91.00 | 121.80 | 78.00 |
| Injection Molded: Tensile Strength at 150°C (MPa) | 11.08 | 6.18 | 10.26 | 8.36 | 8.17 | 6.10 |
| Injection molded: Elongation at 150°C (%) | 135.20 | 60.20 | 78.70 | 56.00 | 63.20 | 54.00 |
| Injection Molded: Flexural Modulus at RT (MPa) | 456.11 | 233.57 | 243.85 | 218.47 | 295.22 | 235.95 |
| Injection Molded: Compression Set at 150°C, 70 hr (%) | 71.58 | 74.21 | 88.33 | 83.45 | 80.30 | 98.00 |

At 150°C, the TPVs of formulations 28, 29, 30, 31, and 32 have higher tensile strength, higher elongation at break, and lower compression set than the commercially available material. In addition, the TPV of formulation 31 has higher flexibility and formulation 29 has similar flexibility to the Zeotherm material at room temperature.

### Example 13

Rather than a twin-screw extruder as used above in Examples 1-8, and 12, a BUSS Kneader is used in this example to compound several 1,3-PBO cured PBT/HXNBR TPVs in order to determine if process-able, plasticizer-free formulations could be produced owing to the excellent mixing characteristics of this machine at a low shear rate that would result in limited polymer breakdown due to thermal, thermo-oxidative, and mechanical forces.

An example of a PBT(35)/HXNBR(65) plasticizer-free (with LLDPE-g-MAH process aid) TPV is detailed below in Table 15. PBT, 1,3-PBO, and Irganox 225, were melt blended, pelletized, and fed into the extruder feed throat. Processing conditions are also set forth in Table 15.

The machine has the following characteristics.

Buss: MX30-22 F40-6 (30 mm, L/D=22, 800 rpm (maximum)).

Discharge extruder (single-screw, 40 mm).

Zone #1 (Unheated): Conveying elements.

Zones #2-4: Mixture of kneading and conveying elements.

Die: 2-hole.

Material is fed into the extruder at an appropriate feed rate and screw speed selected to permit sufficient residence time for dynamic vulcanization to take place. Barrel temperatures are selected based on melting points and/or softening points of the plastic and other TPV components. Barrel temperatures should be adjusted to avoid component decomposition.

Formulation 33 is a plasticizer-free TPV composition containing LLDPE-g-MAH as a process aid and PBT/PBO blend.

**Table 15. Formulation in Weight% for Valox 315/HXNBR TPVs Made on a BUSS Kneader.**

| | **Thermoplastic Vulcanizate (TPV) formulation** |
|---|---|
| **Formulation no.** | **33** |
| Valox 315 + PBO Blend + Irganox B225 | 31.94 + 3.45 + 0.14 |
| HXNBR | 59.31 |
| L4180 | 5.16 |
| Total | 100 |

| **Processing Conditions** | |
|---|---|
| Buss Kneader Screw Speed (RPM) | 150-300 |
| Feed Rate (Ib/hr) | 15-40 |
| Average Kneader Torque (%) | 77 |
| Discharge Extruder Screw Speed (RPM) | 25-100 |
| Average Discharge Extruder Torque (%) | 50 |

PBT, 1,3-PBO, and Irganox 225 are melt blended, pelletized, and fed into the extruder feed throat. The following conditions are employed.

Strands were water cooled, pelletized, and dried.

Melt-fracture free TPV strands that could be pelletized were obtained. However, the TPV melt viscosity is high and does not satisfactorily permit injection molding or extrusion with the equipment described in the above examples.

Having described the compositions and the methods for preparing them in detail and by reference to specific examples thereof, it will be apparent that modifications and variations are possible without departing from the scope of what is defined in the appended claims. More specifically, although some aspects of the present disclosure are identified herein as particularly advantageous, it is contemplated that the present disclosure is not necessarily limited to these particular aspects of the disclosure.

Itemized list of embodiments:
1. A thermoplastic vulcanizate comprising a plastic phase and a rubber phase, wherein
   a) the plastic phase comprises from about 30 parts to about 95 parts by weight, based on 100 parts by weight of the plastic and rubber phases, of a plastic having a melting point of about 160°C to about 260°C, wherein the plastic is
      i) a semi-crystalline engineering polyester,
      ii) a semi-crystalline copolyester elastomer,
      iii) a semi-crystalline aliphatic polyamide, or a mixture thereof; and
   b) the rubber phase comprises from about 70 parts to about 5 parts, by weight based on 100 parts by weight of the plastic and rubber phases, of a hydrogenated carboxylated nitrile rubber; and
   c) crosslinks between reactive groups in the hydrogenated carboxylated nitrile rubber.
2. A thermoplastic vulcanizate according to embodiment 1, wherein the crosslinks are formed by a reaction between an addition type curing agent and reactive groups in the hydrogenated carboxylated nitrile rubber.
3. A thermoplastic vulcanizate prepared by dynamically crosslinking a melt blend with an addition type curing agent, wherein the melt blend comprises a plastic phase and a rubber phase, and wherein
   the plastic phase comprises from about 30 parts to about 95 parts by weight, based on 100 parts by weight of the plastic and rubber phases, of a plastic having a melting point of about 160°C to about 260°C, wherein the plastic is
      i) a semi-crystalline engineering polyester;
      ii) a semi-crystalline copolyester elastomer, or
      iii) a semi-crystalline aliphatic polyamide, or a mixture thereof; and
   the rubber phase comprises from about 70 parts to about 5 parts, by weight based on 100 parts by weight of the plastic and rubber phases, of a hydrogenated carboxylated nitrile rubber.
4. A thermoplastic vulcanizate according to any one of embodiments 1-3, wherein
   the plastic phase comprises about 30 parts to about 70 parts by weight, based on 100 parts by weight of the plastic and rubber phases, of the plastic, and the plastic has a melting point of about 160°C to about 260°C and is
   i) a semi-crystalline engineering polyester,
   ii) a semi-crystalline copolyester elastomer, or
   Iv) a semi-crystalline aliphatic polyamide, or mixtures thereof; and
   the rubber phase comprises from about 70 parts to about 30 parts, by weight based on 100 parts by weight of the plastic and rubber phases, of the hydrogenated carboxylated nitrile rubber.
5. A thermoplastic vulcanizate according to any one of embodiments 1-3, wherein
   the plastic phase comprises about 70 parts to about 95 parts by weight, based on 100 parts by weight of the plastic and rubber phases, of a plastic, and the plastic has a melting point of about 160°C to about 260°C and is
   i) a semi-crystalline engineering polyester,
   ii) a semi-crystalline copolyester elastomer, or
   Iv) a semi-crystalline aliphatic polyamide, or mixtures thereof; and
   the rubber phase comprises from about 30 parts to about 5 parts, by weight based on 100 parts by weight of the plastic and rubber phases, of the hydrogenated carboxylated nitrile rubber.
6. A thermoplastic vulcanizate according to any one of embodiments 1-5, further comprising a plasticizer.
7. A thermoplastic vulcanizate according to embodiment 6, wherein the plasticizer is melt miscible with the rubber phase and the plastic phase.
8. A thermoplastic vulcanizate according to embodiment 6, wherein the plasticizer is selected from polyether esters, monomeric ether esters, aliphatic polymeric esters, aromatic polymeric esters, polyesters, ester terminated poly butylene adipates, sulfonamides, and mixtures thereof.
9. A thermoplastic vulcanizate according to any one of embodiments 6-8, wherein the amount of plasticizer in the thermoplastic vulcanizate is from about 4 parts to about 35 parts, based on 100 parts by weight of the plastic and rubber phases.
10. A thermoplastic vulcanizate according to any one of embodiments 6-9, wherein the plasticizer is capable of functioning as a plasticizer for one or both of the plastic phase or rubber phase at the plastic melt temperature
11. A thermoplastic vulcanizate according to any one of embodiments 2-10, wherein the addition type curing agent is a multifunctional oxazoline or epoxide.
12. A thermoplastic vulcanizate according to any one of embodiments 2-11, wherein the thermoplastic vulcanizate comprises from about 1 part to about 15 parts, based on 100 parts by weight of the plastic and rubber phases, of the addition type curing agent.
13. A thermoplastic vulcanizate according one of embodiments 2-12 wherein the addition type curing agent is 2,2'-(1,3-phenylene)bis(2-oxazoline), or 2,2'-(1,4-phenylene)bis(2-oxazoline), or 2,2'-(2,6-pyridylene)bis(2-oxazoline), or mixtures thereof.
14. A thermoplastic vulcanizate according to any one of embodiments 1-13 where greater than 80 weight per cent of the rubber is crosslinked.
15. A thermoplastic vulcanizate according to any one of embodiments 1-13, wherein greater than 80 weight percent of the rubber is not soluble in a solvent that readily dissolves the un-crosslinked rubber.
16. A thermoplastic vulcanizate according to any one of embodiments 1-15, wherein the semi-crystalline engineering polyester is a poly (butylene terephthalate), poly (trimethylene terephthalate), poly (ethylene terephthalate), or a mixture thereof.
17. A thermoplastic vulcanizate according to any one of embodiments 1-15 wherein the semi-crystalline copolyester elastomer comprises crystalline segments derived from poly(butylene terephthalate), and the elastomeric segments are derived from poly (dimethylene oxide), poly (trimethylene oxide), poly (tetramethylene oxide, or mixtures thereof, and the semi-crystalline copolyester elastomer has a hardness from about Shore D 70 to about Shore D 85.
18. A thermoplastic vulcanizate according to any one of embodiments 1-15, wherein the aliphatic polyamide is a polycaprolactam, polylaurolactam, poly(11-aminoundecanoic acid), a polyamide derived from hexamethylenediamine and adipic acid, poly(hexamethylene adipamide-co-caprolactam), or a mixture thereof.
19. A thermoplastic vulcanizate according to embodiment 16, wherein the plasticizer is an ester terminated poly (1,3-butylene adipate) and the thermoplastic vulcanizate comprises about 4 to 20 parts, based on 100 parts by weight of the plastic and rubber phases, of the plasticizer.
20. A thermoplastic vulcanizate according to embodiment 17, wherein the plasticizer is a diester terminated poly ethylene glycol or monomeric ether ester or aliphatic polymeric ester or aromatic polymeric ester, and the thermoplastic vulcanizate comprises about 4 to 35 parts, based on 100 parts by weight of the plastic and rubber phases, of the plasticizer.
21. A thermoplastic vulcanizate according to embodiment 18, wherein the plasticizer is N-(n-butyl)benzenesulfonamide and the thermoplastic vulcanizate comprises about 4 to 35 parts, based on 100 parts by weight of the plastic and rubber phases, of the plasticizer, or the plasticizer is methyl 4-hydroxybenzoate and the thermoplastic vulcanizate comprises about 4 to 20 parts of the plasticizer.
22. A thermoplastic vulcanizate according to any one of embodiments 1 to 21, wherein the hydrogenated carboxylated nitrile rubber has a copolymerized nitrile content of about 15 to about 50 weight per cent of the rubber, and the copolymerized acid crosslinking site is about 1 to about 10 weight per cent of the rubber.
23. A thermoplastic vulcanizate according to any of embodiments 1-22, wherein the thermoplastic vulcanizate further comprises a cure accelerator selected from aryl phosphites, alkyl phosphites, aryl/alkyl phosphite, and mixtures thereof.
24. A gasket, tube, hose, seal, vibration dampener, stator, fitting, housing, case, film, shock absorber, anti-vibration mount, coupling, bushing, sleeve, or bellows, or foam comprising a thermoplastic vulcanizate according to any one of embodiments 1-23.
25. A tube or hose comprising at least one layer comprising a thermoplastic vulcanizate according to any one of embodiments 1-23.
26. A process for producing a thermoplastic vulcanizate comprising mixing a composition comprising a plastic phase and a rubber phase with an addition type curing agent, wherein the mixing is carried out under conditions of shear and at a temperature above the melting point of the plastic phase, and wherein
   the plastic phase comprises from about 30 parts to about 95 parts by weight, based on 100 parts by weight of the plastic and rubber phases, of a plastic having a melting point of about 160°C to about 260°C, wherein the plastic is
      a semi-crystalline engineering polyester,
      a semi-crystalline copolyester elastomer, or
      a semi-crystalline aliphatic polyamide, or mixtures thereof; and
   the rubber phase comprises from about 70 parts to about 5 parts, by weight based on 100 parts by weight of the plastic and rubber phases, of a hydrogenated carboxylated nitrile rubber.
27. A process according to embodiment 26, wherein the rubber phase and the plastic phase are melt blended prior to the addition of the addition type curing agent.
28. A process according to embodiment 26, wherein the rubber phase and the plastic phase are melt blended while the addition type curing agent is added to the composition.
29. A process according to embodiment 26, wherein the process comprises:
   prior to melt blending with the rubber, melt blending the plastic phase with a predetermined amount of addition type curing agent to form a blend of the curing agent and plastic;
   mixing the blend of the curing agent and plastic with the rubber phase to form a blend of plastic phase and rubber phase.
30. A process according to embodiment 29, further comprising adding additional addition type curing agent to the blend of rubber phase and plastic phase with continued melt mixing.
31. A process according to embodiment 29, wherein the blend of the curing agent and plastic is pelletized prior to mixing with the rubber phase.
32. A process according to any one of embodiments 26-31, wherein the maximum shear rate is less than 10,000s⁻¹.
33. A process according to embodiment 26, where the composition is prepared by melt blending the plastic phase with the curing agent to form a plastic phase/curing agent blend, and melt blending the plastic phase/curing agent blend with the rubber phase.
34. A process according to any of embodiments 26-33, wherein the composition further comprises a cure accelerator selected from aryl phosphites, alkyl phosphites, aryl/alkyl phosphite, and mixtures thereof.
35. A process according to any one of embodiments 26-31, wherein the composition further comprises a cure accelerator selected from tris(2,4-di-*t*-butylphenyl) phosphite, bis(2,4-di-*t*-butylphenyl)pentaerythritol diphosphite, and mixtures thereof.
36. A process according to any of embodiment 34 or 35 wherein the cure accelerator is added to the mixture at any time during the process.
37. A process according to any one of embodiments 26-36, wherein
   the plastic phase comprises about 30 parts to about 70 parts by weight, based on 100 parts by weight of the plastic and rubber phases, of a plastic, and the plastic is
   i) a semi-crystalline engineering polyester,
   ii) a semi-crystalline copolyester elastomer, or
   iv) a semi-crystalline aliphatic polyamide, or mixtures thereof; and
   the rubber phase comprises from about 70 parts to about 30 parts, by weight based on 100 parts by weight of the plastic and rubber phases, of the hydrogenated carboxylated nitrile rubber.
38. A process according to any one of embodiments 26-36, wherein
   the plastic phase comprises about 70 parts to about 95 parts by weight, based on 100 parts by weight of the plastic and rubber phases, of a plastic, and the plastic is
   i) a semi-crystalline engineering polyester,
   ii) a semi-crystalline copolyester elastomer, or
   iv) a semi-crystalline aliphatic polyamide, or mixtures thereof; and
   the rubber phase comprises from about 30 parts to about 5 parts, by weight based on 100 parts by weight of the plastic and rubber phases, of the hydrogenated carboxylated nitrile rubber.
39. A process according to any one of embodiments 26-38, wherein a plasticizer selected from polyether esters, monomeric ether esters, aliphatic polymeric esters, aromatic polymeric esters, polyesters, ester terminated poly butylene adipates, sulfonamides and mixtures thereof, is introduced as plasticizer when convenient and appropriate during the process.
40. A process according to embodiment 39, wherein the plasticizer is added prior to, or after the mixing of a composition comprising a plastic phase and a rubber phase with an addition type curing agent or split between the two addition points.
41. A process according to any one of embodiments 26-41, wherein the amount of the addition type curing agent is from about 1 part to about 15 parts, based on 100 parts by weight of the plastic and rubber phases.
42. A thermoplastic vulcanizate comprising a plastic phase, a rubber phase, and a plasticizer, wherein
   a) the plastic phase comprises from about 30 parts to about 70 parts by weight, based on 100 parts by weight of the plastic and rubber phases, of a plastic having a melting point of about 160°C to about 260°C, wherein the plastic is
      i) a semi-crystalline engineering polyester,
      ii) a semi-crystalline copolyester elastomer,
      iii) a semi-crystalline aliphatic polyamide, or a mixture thereof; and
   b) the rubber phase comprises from about 70 parts to about 30 parts, by weight based on 100 parts by weight of the plastic and rubber phases, of a hydrogenated carboxylated nitrile rubber;
   c) the amount of plasticizer is from about 5 parts to about 35 parts, based on 100 parts by weight of the plastic and rubber phases; and
   d) ester-amide crosslinks between reactive groups in the hydrogenated carboxylated nitrile rubber.
43. A thermoplastic vulcanizate according to embodiment 42, wherein the crosslinks are formed by a reaction between an oxazoline curing agent and reactive groups in the hydrogenated carboxylated nitrile rubber.
44. A thermoplastic vulcanizate according to embodiment 42 or embodiment 43, wherein the plasticizer is melt miscible with the rubber phase and the plastic phase.
45. A thermoplastic vulcanizate according to any one of embodiments 42-44, wherein the plasticizer is selected from polyether esters, monomeric ether esters, aliphatic polymeric esters, aromatic polymeric esters, polyesters, ester terminated poly butylene adipates, sulfonamides, and mixtures thereof.
46. A thermoplastic vulcanizate according to any one of embodiments 42-45, wherein the plasticizer is capable of functioning as a plasticizer for one or both of the plastic phase or rubber phase at the plastic melt temperature
47. A thermoplastic vulcanizate according to embodiment 43, wherein the oxazoline curing agent is a multifunctional oxazoline.
48. A thermoplastic vulcanizate according to any one of embodiments 42-47, wherein the thermoplastic vulcanizate comprises from about 1 part to about 15 parts, based on 100 parts by weight of the plastic and rubber phases, of the oxazoline curing agent.
49. A thermoplastic vulcanizate according one of embodiments 43-48, wherein the oxazoline curing agent is 2,2'-(1,3-phenylene)bis(2-oxazoline), or 2,2'-(1,4-phenylene)bis(2-oxazoline), or 2,2'-(2,6-pyridylene)bis(2-oxazoline), or a mixture thereof.
50. A thermoplastic vulcanizate according to any one of embodiments 42-49 where greater than 80 weight per cent of the rubber is crosslinked.
51. A thermoplastic vulcanizate according to any one of embodiments 42-49, wherein greater than 80 weight percent of the rubber is not soluble in a solvent that readily dissolves the un-crosslinked rubber.
52. A thermoplastic vulcanizate according to any one of embodiments 42-51, wherein the semi-crystalline engineering polyester is a poly (butylene terephthalate), poly (trimethylene terephthalate), poly (ethylene terephthalate), or a mixture thereof.
53. A thermoplastic vulcanizate according to any one of embodiments 42-51 wherein the semi-crystalline copolyester elastomer comprises crystalline segments derived from poly(butylene terephthalate), and the elastomeric segments are derived from poly (dimethylene oxide), poly (trimethylene oxide), poly (tetramethylene oxide, or mixtures thereof, and the semi-crystalline copolyester elastomer has a hardness from about Shore D 70 to about Shore D 85.
54. A thermoplastic vulcanizate according to any one of embodiments 42-51, wherein the aliphatic polyamide is a polycaprolactam, polylaurolactam, poly(11-aminoundecanoic acid), a polyamide derived from hexamethylenediamine and adipic acid, poly(hexamethylene adipamide-co-caprolactam, or a mixture thereof.
55. A thermoplastic vulcanizate according to embodiment 52, wherein the plasticizer is an ester terminated poly (1,3-butylene adipate) and the thermoplastic vulcanizate comprises about 4 to 20 parts, based on 100 parts by weight of the plastic and rubber phases, of the plasticizer.
56. A thermoplastic vulcanizate according to embodiment 53, wherein the plasticizer is a diester terminated poly ethylene glycol or monomeric ether ester or aliphatic polymeric ester or aromatic polymeric ester, and the thermoplastic vulcanizate comprises about 4 to 35 parts, based on 100 parts by weight of the plastic and rubber phases, of the plasticizer.
57. A thermoplastic vulcanizate according to embodiment 54, wherein the plasticizer is N-(n-butyl)benzenesulfonamide and the thermoplastic vulcanizate comprises about 4 to 35 parts, based on 100 parts by weight of the plastic and rubber phases, of the plasticizer, or the plasticizer is methyl 4-hydroxybenzoate and the thermoplastic vulcanizate comprises about 4 to 20 parts of the plasticizer.
58. A thermoplastic vulcanizate according to any one of embodiments 42-57, wherein the hydrogenated carboxylated nitrile rubber has a copolymerized nitrile content of about 15 to about 50 weight per cent of the rubber, and the copolymerized acid crosslinking site is about 1 to about 10 weight per cent of the rubber.
59. A thermoplastic vulcanizate according to any of embodiments 42-58, wherein the thermoplastic vulcanizate further comprises a cure accelerator selected from aryl phosphites, alkyl phosphites, aryl/alkyl phosphite, and mixtures thereof.
60. A gasket, tube, hose, seal, vibration dampener, stator, fitting, housing, case, film, shock absorber, anti-vibration mount, coupling, bushing, sleeve, or bellows, or foam comprising a thermoplastic vulcanizate according to any one of embodiments 42-59.
61. A tube or hose comprising at least one layer comprising a thermoplastic vulcanizate according to any one of embodiments 42-59.
62. A thermoplastic vulcanizate comprising a plastic phase and a rubber phase, wherein
   a) the plastic phase comprises from about 70 parts to about 95 parts by weight, based on 100 parts by weight of the plastic and rubber phases, of a plastic having a melting point of about 160°C to about 260°C, wherein the plastic is
      i) a semi-crystalline engineering polyester,
      ii) a semi-crystalline copolyester elastomer,
      iii) a semi-crystalline aliphatic polyamide, or a mixture thereof; and
   b) the rubber phase comprises from about 30 parts to about 5 parts, by weight based on 100 parts by weight of the plastic and rubber phases, of a hydrogenated carboxylated nitrile rubber;
   c) an optional plasticizer, wherein the amount of plasticizer, when present, is from about 0 parts to about 35 parts, based on 100 parts by weight of the plastic and rubber phases; and
   d) ester-amide crosslinks between reactive groups in the hydrogenated carboxylated nitrile rubber.
63. A thermoplastic vulcanizate according to embodiment 63, wherein the crosslinks are formed by a reaction between an oxazoline curing agent and reactive groups in the hydrogenated carboxylated nitrile rubber.
64. A thermoplastic vulcanizate according to embodiment 62 or embodiment 63, wherein the plasticizer is melt miscible with the rubber phase and the plastic phase.
65. A thermoplastic vulcanizate according to any one of embodiments 62-64, wherein the plasticizer is selected from polyether esters, monomeric ether esters, aliphatic polymeric esters, aromatic polymeric esters, polyesters, ester terminated poly butylene adipates, sulfonamides, and mixtures thereof.
66. A thermoplastic vulcanizate according to any one of embodiments 62-65, wherein the amount of plasticizer in the thermoplastic vulcanizate is from about 4 parts to about 35 parts, based on 100 parts by weight of the plastic and rubber phases.
67. A thermoplastic vulcanizate according to any one of embodiments 62-66, wherein the plasticizer is capable of functioning as a plasticizer for one or both of the plastic phase or rubber phase at the plastic melt temperature
68. A thermoplastic vulcanizate according to embodiment 64, wherein the oxazoline curing agent is a multifunctional oxazoline.
69. A thermoplastic vulcanizate according to any one of embodiments 63-68, wherein the thermoplastic vulcanizate comprises from about 1 part to about 15 parts, based on 100 parts by weight of the plastic and rubber phases, of the oxazoline curing agent.
70. A thermoplastic vulcanizate according one of embodiments 63-69, wherein the oxazoline curing agent is 2,2'-(1,3-phenylene)bis(2-oxazoline), or 2,2'-(1,4-phenylene)bis(2-oxazoline), or 2,2'-(2,6-pyridylene)bis(2-oxazoline), or a mixture thereof.
71. A thermoplastic vulcanizate according to any one of embodiments 62-70 where greater than 80 weight per cent of the rubber is crosslinked.
72. A thermoplastic vulcanizate according to any one of embodiments 62-70, wherein greater than 80 weight percent of the rubber is not soluble in a solvent that readily dissolves the un-crosslinked rubber.
73. A thermoplastic vulcanizate according to any one of embodiments 62-72, wherein the semi-crystalline engineering polyester is a poly (butylene terephthalate), poly (trimethylene terephthalate), poly (ethylene terephthalate), or mixture thereof.
74. A thermoplastic vulcanizate according to any one of embodiments 62-72 wherein the semi-crystalline copolyester elastomer comprises crystalline segments derived from poly(butylene terephthalate), and the elastomeric segments are derived from poly (dimethylene oxide), poly (trimethylene oxide), poly (tetramethylene oxide, or mixtures thereof, and the semi-crystalline copolyester elastomer has a hardness from about Shore D 70 to about Shore D 85.
75. A thermoplastic vulcanizate according to any one of embodiments 62-72, wherein the aliphatic polyamide is a polycaprolactam, polylaurolactam, poly(11-aminoundecanoic acid), a polyamide derived from hexamethylenediamine and adipic acid, poly(hexamethylene adipamide-co-caprolactam, or a mixture thereof.
76. A thermoplastic vulcanizate according to embodiment 73, wherein the plasticizer is an ester terminated poly (1,3-butylene adipate) and the thermoplastic vulcanizate comprises about 4 to 20 parts, ester terminated poly (1,3-butylene adipate), of the plasticizer.
77. A thermoplastic vulcanizate according to embodiment 74, wherein the plasticizer is a diester terminated poly ethylene glycol or monomeric ether ester or aliphatic polymeric ester or aromatic polymeric ester, and the thermoplastic vulcanizate comprises about 4 to 35 parts, based on 100 parts by weight of the plastic and rubber phases, of the plasticizer.
78. A thermoplastic vulcanizate according to embodiment 75, wherein the plasticizer is N-(n-butyl)benzenesulfonamide and the thermoplastic vulcanizate comprises about 4 to 35 parts, based on 100 parts by weight of the plastic and rubber phases, or the plasticizer is methyl 4-hydroxybenzoate and the thermoplastic vulcanizate comprises about 4 to 20 parts of the plasticizer.
79. A thermoplastic vulcanizate according to any one of embodiments 62-78, wherein the hydrogenated carboxylated nitrile rubber has a copolymerized nitrile content of about 15 to about 50 weight per cent of the rubber, and the copolymerized acid crosslinking site is about 1 to about 10 weight per cent of the rubber.
80. A thermoplastic vulcanizate according to any of embodiments 62-79, wherein the thermoplastic vulcanizate further comprises a cure accelerator selected from aryl phosphites, alkyl phosphites, aryl/alkyl phosphite, and mixtures thereof.
81. A gasket, tube, hose, seal, vibration dampener, stator, fitting, housing, case, film, shock absorber, anti-vibration mount, coupling, bushing, sleeve, or bellows, or foam comprising a thermoplastic vulcanizate according to any one of embodiments 62-80.
82. A tube or hose comprising at least one layer comprising a thermoplastic vulcanizate according to any one of embodiments 62-80.
83. A thermoplastic vulcanizate according to embodiment 6, 42, 43, 62, or 63, wherein the plasticizer is melt miscible with the rubber phase but not the plastic phase, the plastic phase but not the rubber phase, or neither the rubber phase nor the plastic phase.
84. A thermoplastic vulcanizate wherein
   the plastic phase comprises about 70 parts to about 95 parts by weight, based on 100 parts by weight of the plastic and rubber phases, of the plastic, and the plastic has a melting point of about 160°C to about 260°C and is
   i) a semi-crystalline engineering polyester,
   ii) a semi-crystalline copolyester elastomer, or
   Iv) a semi-crystalline aliphatic polyamide, or mixtures thereof; and
   the rubber phase comprises from about 30 parts to about 5 parts, by weight based on 100 parts by weight of the plastic and rubber phases, of the hydrogenated carboxylated nitrile rubber.

## Claims

1. A thermoplastic vulcanizate comprising a plastic phase and a rubber phase, wherein
a) the plastic phase comprises from 30 parts to 95 parts by weight, based on 100 parts by weight of the plastic and rubber phases, of a plastic having a melting point of 160°C to 260°C, wherein the plastic is
i) a semi-crystalline engineering polyester,
ii) a semi-crystalline copolyester elastomer,
iii) a semi-crystalline aliphatic polyamide, or a mixture thereof; and
b) the rubber phase comprises from 70 parts to 5 parts, by weight based on 100 parts by weight of the plastic and rubber phases, of a hydrogenated carboxylated nitrile rubber; and
c) crosslinks between reactive groups in the hydrogenated carboxylated nitrile rubber.

2. The thermoplastic vulcanizate according to claim 1, wherein the crosslinks are formed by a reaction between an addition type curing agent and reactive groups in the hydrogenated carboxylated nitrile rubber.

3. The thermoplastic vulcanizate according to claims 1 or 2, wherein
the plastic phase comprises 30 parts to 70 parts or 50 parts to 70 parts by weight, based on 100 parts by weight of the plastic and rubber phases, of the plastic,; and
the rubber phase comprises from 70 parts to 30 parts or 50 parts to 30 parts, by weight based on 100 parts by weight of the plastic and rubber phases, of the hydrogenated carboxylated nitrile rubber.

4. The thermoplastic vulcanizate according to any preceding claim, further comprising a plasticizer and optionally wherein the plasticizer is melt miscible with the rubber phase and/or the plastic phase.

5. The thermoplastic vulcanizate according to any one of claims 2-4, formed from 1 part to 15 parts, 1 part to 12 parts, or 1 part to 8 parts, based on 100 parts by weight of the plastic and rubber phases, of the addition type curing agent.

6. The thermoplastic vulcanizate according one of claims 2-5 wherein the addition type curing agent is 2,2'-(1,3-phenylene)bis(2-oxazoline), or 2,2'-(1,4-phenylene)bis(2-oxazoline), or 2,2'-(2,6-pyridylene)bis(2-oxazoline), or mixtures thereof.

7. The thermoplastic vulcanizate according to any preceding claim, wherein:
the semi-crystalline engineering polyester comprises or is derived from a poly (butylene terephthalate), poly (trimethylene terephthalate), poly (ethylene terephthalate), or a mixture thereof;
the semi-crystalline copolyester elastomer comprises or is derived from crystalline segments derived from poly(butylene terephthalate), and the elastomeric segments are derived from poly (dimethylene oxide), poly (trimethylene oxide), poly (tetramethylene oxide, or mixtures thereof, and the semi-crystalline copolyester elastomer has a hardness from Shore D 70 to Shore D 85; and/or
the aliphatic polyamide comprises or is derived from a polycaprolactam, polylaurolactam, poly(11-aminoundecanoic acid), a polyamide derived from hexamethylenediamine and adipic acid, poly(hexamethylene adipamide-co-caprolactam), or a mixture thereof.

8. The thermoplastic vulcanizate according to any preceding claim when dependent on claim 4, wherein:
a) the plasticizer is an ester terminated poly (1,3-butylene adipate) and the thermoplastic vulcanizate comprises 4 to 20 parts, or 8 to 20 parts based on 100 parts by weight of the plastic and rubber phases, of the plasticizer;
b) the plasticizer is a diester terminated poly ethylene glycol, a monomeric ether ester, an aliphatic polymeric ester or an aromatic polymeric ester, and the thermoplastic vulcanizate comprises 4 to 35 parts, 4 to 25 parts, based on 100 parts by weight of the plastic and rubber phases, of the plasticizer;
c) the plasticizer is N-(n-butyl)benzene sulfonamide and the thermoplastic vulcanizate comprises 4 to 35 parts, or 4 to 25 parts, based on 100 parts by weight of the plastic and rubber phases, of the plasticizer, or
d) the plasticizer is methyl 4-hydroxybenzoate and the thermoplastic vulcanizate comprises 4 to 35 parts, or 4 to 25 parts of the plasticizer.

9. The thermoplastic vulcanizate according to any preceding claim, wherein the hydrogenated carboxylated nitrile rubber has a copolymerized nitrile content of 15 to 50 weight per cent of the rubber, and the copolymerized acid crosslinking site is 1 to 10 weight per cent of the rubber.

10. The thermoplastic vulcanizate according to any preceding claim prepared by dynamically crosslinking a melt blend with an addition type curing agent, wherein the melt blend comprises the plastic phase and the rubber phase; and
wherein the crosslinks are formed by a reaction between an oxazoline curing agent and reactive groups in the hydrogenated carboxylated nitrile rubber.

11. A thermoplastic elastomer comprising a plastic phase and a rubber phase, wherein
a) the plastic phase comprises from 30 parts to 95 parts by weight, based on 100 parts by weight of the plastic and rubber phases, of a plastic having a melting point of 160°C to 260°C, wherein the plastic is
i) a semi-crystalline engineering polyester,
ii) a semi-crystalline copolyester elastomer,
iii) a semi-crystalline aliphatic polyamide or a mixture thereof; and
b) the rubber phase comprises from 70 parts to 5 parts, by weight based on 100 parts by weight of the plastic and rubber phases, of a hydrogenated carboxylated nitrile rubber; and
c) an optional plasticizer, wherein the amount of plasticizer, when present, is from about 0 parts to about 35 parts, based on 100 parts by weight of the plastic and rubber phases.

12. A gasket, tube, hose, seal, vibration dampener, stator, fitting, housing, case, film, shock absorber, anti-vibration mount, coupling, bushing, sleeve, bellows, foam comprising the
thermoplastic vulcanizate according to any one of claims 1-10 or formed from the
thermoplastic elastomer according to claim 11; or
a tube or hose having at least one layer comprising the thermoplastic vulcanizate according to any one of claims 1-10 or formed from the thermoplastic elastomer according to claim 11.

13. A process for producing a thermoplastic vulcanizate comprising mixing a composition comprising a plastic phase and a rubber phase with an addition type curing agent, wherein the mixing is carried out under conditions of shear and at a temperature above the melting point of the plastic phase, and wherein
the plastic phase comprises from 30 parts to 95 parts by weight, based on 100 parts by weight of the plastic and rubber phases, of a plastic having a melting point of 160°C to 260°C, wherein the plastic is
a semi-crystalline engineering polyester,
a semi-crystalline copolyester elastomer, or
a semi-crystalline aliphatic polyamide, or mixtures thereof; and
the rubber phase comprises from 70 parts to 5 parts, by weight based on 100 parts by weight of the plastic and rubber phases, of a hydrogenated carboxylated nitrile rubber.

14. The process according to claim 13, wherein the process comprises:
prior to melt blending with the rubber, melt blending the plastic phase with a predetermined amount of addition type curing agent to form a blend of the curing agent and plastic; and
mixing the blend of the curing agent and plastic with the rubber phase to form a blend of plastic phase and rubber phase.

15. A process according to claim 13 or claim 14, wherein a plasticizer selected from polyether esters, monomeric ether esters, aliphatic polymeric esters, aromatic polymeric esters, polyesters, ester terminated poly butylene adipates, sulfonamides and mixtures thereof, is introduced as plasticizer when convenient and appropriate during the process.
